(19) Europäisches Patentamt
European Patent Office
Office européen des brevets

(11) EP 2 568 006 A1

(12) **EUROPEAN PATENT APPLICATION**
published in accordance with Art. 153(4) EPC

(43) Date of publication:
**13.03.2013 Bulletin 2013/11**

(21) Application number: **11820014.6**

(22) Date of filing: **25.08.2011**

(51) Int Cl.:
***C08L 27/12*** *(2006.01)* ***C08K 3/04*** *(2006.01)*
***C08K 5/17*** *(2006.01)*

(86) International application number:
**PCT/JP2011/069228**

(87) International publication number:
**WO 2012/026552 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2010 US 377009 P**

(71) Applicant: **Daikin Industries, Ltd.**
**Osaka 530-8323 (JP)**

(72) Inventors:
- **OTA Daisuke**
  **Osaka-shi**
  **Osaka 530-8323 (JP)**
- **UETA Yutaka**
  **Osaka-shi**
  **Osaka 530-8323 (JP)**
- **KITAICHI Masanori**
  **Osaka-shi**
  **Osaka 530-8323 (JP)**
- **FUKUOKA Shoji**
  **Osaka-shi**
  **Osaka 530-8323 (JP)**

(74) Representative: **HOFFMANN EITLE**
**Patent- und Rechtsanwälte**
**Arabellastrasse 4**
**81925 München (DE)**

# (54) PRODUCTION METHOD FOR FLUORORUBBER COMPOSITION

(57) The present invention provides a method for producing a fluororubber composition that has excellent heat resistance and excellent mechanical properties at high temperatures. The production method comprises the step of mixing a fluororubber (A) and a carbon black (B) in the presence of an organic amine compound (C1) and/or an acid acceptor (C2) to prepare a mixed product, wherein the mixed product has a highest temperature Tm of 80°C to 220°C while being mixed and has a highest temperature of 80°C to 220°C upon being discharged.

EP 2 568 006 A1

## Description

CROSS-REFERENCE TO RELATED APPLICATION

This application claims benefit under 35 U.S.C. §119(e) of U.S. Provisional Application No. 61/377,009 filed on August 25, 2010, incorporated herein by reference in its entirety.

TECHNICAL FIELD

The present invention relates to a method for producing a fluororubber composition that gives a cross-linked product having excellent mechanical properties at high temperatures.

BACKGROUND ART

Fluororubbers are known to be excellent in chemical resistance, oil resistance, and heat resistance, and also to have good compression set resistance at high temperatures. Fluororubbers are now desired to have better mechanical properties at high temperatures, such as strength at high temperature and elongation at high temperature. For example, when a cross-linked fluororubber product is used at as high temperature as more than 100°C, the product is required to have excellent mechanical properties at high temperatures as well as heat resistance, for high durability.

In terms of an increase in the compression set resistance, compositions such as one taught in Patent Document 1 have been proposed. Those compositions, however, have low elongation at room temperature, and therefore will probably have lower elongation at high temperature. The composition described in Patent Document 2 has higher elongation at high temperature, but does not have resistance to more severe use environment. The combination of a fluororubber and a thermoplastic fluoroelastomer in Patent Document 3 has higher strength at high temperature, but the elongation at room temperature of this composition is also low, and therefore the elongation at high temperature will probably be even lower.

Patent Document 1: JP S60-55050 A
Patent Document 2: JP 2008-184496 A
Patent Document 3: JP H06-25500 A

SUMMARY OF THE INVENTION

PROBLEMS TO BE SOLVED BY THE INVENTION

The present invention aims to provide a method for producing a fluororubber composition that gives a cross-linked product having excellent heat resistance and excellent mechanical properties at high temperatures.

MEANS FOR SOLVING THE PROBLEMS

That is, the present invention relates to a method for producing a fluororubber composition, comprising preliminarily mixing a fluororubber (A) and a carbon black (B), in the presence of an organic amine compound (C1) and/or an acid acceptor (C2), and under the condition that a mixed product has a highest temperature Tm of 80 °C to 220 °C while being mixed and being discharged.
In other words, the present invention relates to a method for producing a fluororubber composition, comprising the step of mixing a fluororubber (A) and a carbon black (B) in the presence of an organic amine compound (C1) and/or an acid acceptor (C2) to prepare a mixed product,
wherein the mixed product has a highest temperature Tm of 80°C to 220°C while being mixed and has a highest temperature of 80°C to 220°C upon being discharged.

The carbon black (B) is preferably a carbon black having a nitrogen adsorption specific surface area ($N_2SA$) of 5 to 180 $m^2/g$ and a dibutyl phthalate (DBP) oil absorption of 40 to 180 ml/100 g.

The fluororubber (A) is preferably a vinylidene fluoride copolymer rubber, a tetrafluoroethylene/perfluoro(alkyl vinyl ether) copolymer rubber, or a tetrafluoroethylene/propylene copolymer rubber, in terms of good heat resistance (heat-aging resistance) and oil resistance.

The fluororubber composition preferably contains 5 to 50 parts by mass of the carbon black (B) to 100 parts by mass of the fluororubber (A).

The fluororubber composition preferably contains 0.01 to 10 parts by mass of the organic amine compound

(C1) and/or the acid acceptor (C2), to 100 parts by mass of the fluororubber (A).

The fluororubber composition before cross-linking preferably has a difference δG' (G' (1%) - G' 100%)) of 120 kPa or higher and 3,000 kPa or lower,

the difference determined by subtracting the shear modulus G'(1000) at 100% dynamic strain from the shear modulus G'(1%) at 1% dynamic strain in a dynamic viscoelasticity test with a rubber process analyzer (RPA) under the conditions of a measurement frequency of 1 Hz and a measurement temperature of 100°C.

EFFECT OF THE INVENTION

The present invention can provide a method for producing a fluororubber composition that gives a cross-linked product having excellent heat resistance and excellent mechanical properties at high temperatures.

MODE(S) FOR CARRYING OUT THE INVENTION

In the method for producing a fluororubber composition according to the present invention, a fluororubber composition is obtained through preliminarily mixing a fluororubber (A) and a carbon black (B), in the presence of an organic amine compound (C1) and/or an acid acceptor (C2), and under the condition that a mixed product has a highest temperature Tm of 80 °C to 220 °C while being mixed and being discharged. That is, a fluororubber composition is obtained through mixing of a fluororubber (A) and a carbon black (B) in the presence of an organic amine compound (C1) and/or an acid acceptor (C2). In the above step, the mixed product has a controlled highest temperature Tm of 80°C to 220°C while being mixed and has a controlled highest temperature of 80°C to 220°C upon being discharged. The production method may include any other steps as long as the method includes the step of mixing a fluororubber (A) and a carbon black (B) in the presence of an organic amine compound (C1) and/or an acid acceptor (C2) to prepare a mixed product, wherein the mixed product has a highest temperature Tm of 80°C to 220°C while being mixed and has a highest temperature of 80°C to 220°C upon being discharged.

Each of the elements will be described hereinbelow.

Fluororubber (A)

The fluororubber (A) in the present invention preferably has a structural unit derived from at least one monomer selected from the group consisting of tetrafluoroethylene (TFE), vinylidene fluoride (VdF), and perfluoroethylenic unsaturated compounds (e.g. hexafluoropropylene (HFP) and perfluoro(alkyl vinyl ether) (PAVE)) represented by formula (1):

$CF_2$=CF-$R_f^a$ (1)

wherein $R_f^a$ is -$CF_3$ or -O$R_f^b$ ($R_f^b$ is a C1-C5 perfluoroalkyl group).

In another aspect, the fluororubber is preferably a non-perfluoro fluororubber or a perfluoro fluororubber.

Examples of the non-perfluoro fluororubber include: vinylidene fluoride (VdF) fluororubber; tetrafluoroethylene (TFE)/propylene (Pr) fluororubber; tetrafluoroethylene (TFE)/propylene (Pr)/vinylidene fluoride (VdF) fluororubber; ethylene (Et)/hexafluoropropylene (HFP) fluororubber; ethylene (Et)/hexafluoropropylene (HFP)/vinylidene fluoride (VdF) fluororubber; ethylene (Et)/hexafluoropropylene (HFP)/tetrafluoroethylene (TFE) fluororubber; fluorosilicone fluororubber; and fluorophosphazene fluororubber. Each of these may be used alone, or any of these may be used in combination to the extent that they do not deteriorate the effects of the present invention. More suitable among these are VdF fluororubber, TFE/Pr rubber, and TFE/Pr/VdF rubber because of their good heat-aging resistance and oil resistance.

The VdF rubber preferably has 20 mol% or more and 90 mol% or less, and more preferably 40 mol% or more and 85 mol% or less, of a VdF repeating unit in the total moles of the VdF repeating unit and repeating units derived from other comonomers. The lower limit thereof is further preferably 45 mol% and particularly preferably 50 mol%, while the upper limit thereof is further preferably 80 mol%.

The comonomers in the VdF rubber are not particularly limited as long as they are copolymerizable with VdF. Examples thereof include fluorine-containing monomers such as TFE, HFP, PAVE, chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, and a fluorine-containing monomer represented by formula (2):

$CH_2$=CF$R_f$ (2)

wherein $R_f$ is a C1-C12 linear or branched fluoroalkyl group; fluorine-free monomers such as ethylene (Et), propylene

(Pr), and alkyl vinyl ethers; monomers giving a cross-linkable group (a curing site); and a reactive emulsifier. Each of these monomers and compounds may be used alone, or two or more of these may be used in combination.

The PAVE is more preferably perfluoro(methyl vinyl ether) (PMVE) or perfluoro(propyl vinyl ether) (PPVE), and is particularly preferably PMVE.

The PAVE may be a perfluoro vinyl ether represented by the formula:

$CF_2{=}CFOCF_2OR_f^c$

wherein $R_f^c$ is a C1-C6 linear or branched perfluoroalkyl group, a C5-C6 cyclic perfluoroalkyl group, or a C2-C6 linear or branched perfluorooxyalkyl group having 1 to 3 oxygen atoms. The PAVE is preferably $CF_2{=}CFOCF_2OCF_3$, $CF_2{=}CFOCF_2OCF_2CF_3$, or $CF_2{=}CFOCF_2OCF_2CF_2OCF_3$.

The fluorine-containing monomer of formula (2) is preferably a monomer in which $R_f$ is a linear fluoroalkyl group, and more preferably a monomer in which $R_f$ is a linear perfluoroalkyl group. The carbon number of $R_f$ is preferably 1 to 6. Examples of the fluorine-containing monomer of formula (2) include $CH_2{=}CFCF_3$, $CH_2{=}CFCF_2CF_3$, $CH_2{=}CFCF_2CF_2CF_3$, and $CH_2{=}CFCF_2CF_2CF_2CF_3$. Preferable among these is 2,3,3,3-tetrafluoropropylene represented as $CH_2{=}CFCF_3$.

The VdF rubber is preferably at least one copolymer selected from the group consisting of VdF/HFP copolymer, VdF/TFE/HFP copolymer, VdF/CTFE copolymer, VdF/CTFE/TFE copolymer, VdF/PAVE copolymer, VdF/TFE/PAVE copolymer, VdF/HFP/PAVE copolymer, VdF/HFP/TFE/PAVE copolymer, VdF/TFE/propylene (Pr) copolymer, VdF/ethylene (Et)/HFP copolymer, and copolymer of VdF/fluorine-containing monomer of formula (2). Further, the rubber is more preferably one having at least one selected from the group consisting of TFE, HFP, and PAVE as comonomer(s) other than VdF. Preferable among these is at least one copolymer selected from the group consisting of VdF/HFP copolymer, VdF/TFE/HFP copolymer, copolymer of VdF/fluorine-containing monomer of formula (2), VdF/PAVE copolymer, VdF/TFE/PAVE copolymer, VdF/HFP/PAVE copolymer, and VdF/HFP/TFE/PAVE copolymer. More preferable among these is at least one copolymer selected from the group consisting of VdF/HFP copolymer, VdF/HFP/TFE copolymer, copolymer of VdF/fluorine-containing monomer of formula (2), and VdF/PAVE copolymer. Particularly preferable among these is at least one copolymer selected from the group consisting of VdF/HFP copolymer, copolymer of VdF/fluorine-containing monomer of formula (2), and VdF/PAVE copolymer.

In the VdF/HFP copolymer, the composition of VdF/HFP is preferably (45 to 85)/(55 to 15) (mol%), more preferably (50 to 80)/(50 to 20) (mol%), and further preferably (60 to 80)/(40 to 20) (mol%.

In the VdF/TFE/HFP copolymer, the composition of VdF/TFE/HFP is preferably (30 to 80)/(4 to 35)/(10 to 35) (mol%).

In the VdF/PAVE copolymer, the composition of VdF/PAVE is preferably (65 to 90)/(35 to 10) (mol%).

In the VdF/TFE/PAVE copolymer, the composition of VdF/TFE/PAVE is preferably (40 to 80)/(3 to 40)/(15 to 35) (mol%.

In the VdF/HFP/PAVE copolymer, the composition of VdF/HFP/PAVE is preferably (65 to 90)/(3 to 25)/(3 to 25) (mol%).

In the VdF/HFP/TFE/PAVE copolymer, the composition of VdF/HFP/TFE/PAVE is preferably (40 to 90)/(0 to 25)/(0 to 40)/(3 to 35) (mol%), and more preferably (40 to 80)/(3 to 25)/(3 to 40)/(3 to 25) (mol%).

In the copolymer of VdF/fluorine-containing monomer (2) of formula (2), the mol% ratio of VdF/fluorine-containing monomer (2) units is preferably 85/15 to 20/80 and the amount of monomer units other than the VdF and fluorine-containing monomer (2) units is preferably 0 to 50 mol% of all of the monomer units; the mol% ratio of the VdF/fluorine-containing monomer (2) units is more preferably 80/20 to 20/80. The mol% ratio of the VdF/fluorine-containing monomer (2) units is also preferably 85/15 to 50/50, and the amount of monomer units other than the VdF and fluorine-containing monomer (2) units is also preferably 1 to 50 mol% of all of the monomer units. The monomers other than the VdF and fluorine-containing monomer (2) units are preferably the monomers listed above as the comonomers for VdF, that is, TFE, HFP, PMVE, perfluoroethyl vinyl ether (PEVE), PPVE, CTFE, trifluoroethylene, hexafluoroisobutene, vinyl fluoride, ethylene (Et), propylene (Pr), alkyl vinyl ether, monomers giving a cross-linkable group, and a reactive emulsifier. More preferable among these are PMVE, CTFE, HFP, and TFE.

The TFE/propylene (Pr) fluororubber is a fluorocopolymer containing 45 to 70 mol% of TFE and 55 to 30 mol% of propylene (Pr). In addition to these two components, the rubber may further contain 0 to 40 mol% of a specific third component (e.g. PAVE).

In the ethylene (Et)/HFP copolymer, the composition of Et/HFP is preferably (35 to 80)/(65 to 20) (mol%), and more preferably (40 to 75)/(60 to 25) (mol%).

In the Et/HFP/TFE copolymer, the composition of Et/HFP/TFE is preferably (35 to 75)/(25 to 50)/(0 to 15) (mol%), and more preferably (45 to 75)/(25 to 45)/(0 to 10) (mol%.

Examples of the perfluoro fluororubber include those containing TFE/PAVE. The composition of TFE/PAVE is preferably (50 to 90)/(50 to 10) (mol%), more preferably (50 to 80)/(50 to 20) (mol%), and further preferably (55 to 75)

/ (45 to 25) (mol%).

Examples of the PAVE in this case include PMVE and PPVE. Each of these may be used alone, or any of these may be used in combination.

The fluororubber (A) preferably has a number average molecular weight Mn of 5,000 to 500,000, more preferably 10,000 to 500,000, and particularly preferably 20,000 to 500,000.

In order to provide a fluororubber composition having a low viscosity, for example, other species of fluororubbers may be blended with the fluororubber (A). Examples of other fluororubbers include low molecular weight liquid fluororubbers (number average molecular weight: 1,000 or more), low molecular weight fluororubbers having a number average molecular weight of about 10,000, and fluororubbers having a number average molecular weight of about 100,000 to about 200,000.

From the viewpoint of processability, the fluororubber (A) preferably has a Mooney viscosity at 100°C of within a range of 20 to 200, and further preferably 30 to 180. The Mooney viscosity is measured in accordance with ASTM-D1646 and JIS K 6300.

The above-described non-perfluoro fluororubber and perfluoro fluororubber may be produced by a common method such as emulsion polymerization, suspension polymerization, or solution polymerization. In particular, a polymerization method using an iodine (bromine) compound, which is known as iodine (bromine) transfer polymerization, can provide a fluororubber having a narrow molecular weight distribution.

The listed monomers in the above non-perfluoro fluororubber and perfluoro fluororubber are examples of the main monomers of the rubber, and the main monomers may be suitably copolymerized with monomers giving a cross-linkable group. The monomer giving a cross-linkable group may be any monomer which can provide a suitable cross-linkable group depending on the production method and the cross-link system. Examples thereof include known polymerizable compounds and chain transfer agents which have an iodine atom, bromine atom, carbon-carbon double bond, cyano group, carboxyl group, hydroxyl group, amino group, ester group or the like.

Examples of the monomer giving a preferable cross-linkable group include a compound represented by formula (3) :

$CY^1_2=CY^2R_f^2X^1$ (3)

wherein $Y^1$ and $Y^2$ each are a fluorine atom, hydrogen atom, or $-CH_3$; $R_f^2$ is a linear or branched fluoroalkylene group which may have one or more ethereal oxygen atoms and which may have one or more aromatic rings, and in which part or all of the hydrogen atoms are replaced by fluorine atoms; and $X^1$ is an iodine atom or a bromine atom. Specific examples thereof include: iodine-containing monomers and bromine-containing monomers represented by formula (4):

$CY^1_2=CY^2R_f^3CHR^1-X^1$ (4)

wherein $Y^1$, $Y^2$, and $X^1$ each are the same as defined above; $R_f^3$ is a linear or branched fluoroalkylene group which may have one or more ethereal oxygen atoms and in which part or all of the hydrogen atoms are replaced by fluorine atoms, i.e., $R_f^3$ is a linear or branched fluoroalkylene group in which part or all of the hydrogen atoms are replaced by fluorine atoms, a linear or branched fluorooxyalkylene group in which part or all of the hydrogen atoms are replaced by fluorine atoms, or a linear or branched fluoropolyoxyalkylene group in which part or all of the hydrogen atoms are replaced by fluorine atoms; $R^1$ is a hydrogen atom or a methyl group; and iodine-containing monomers and bromine-containing monomers represented by formulas (5) to (22):

$CY^4_2=CY^4(CF_2)_n-X^1$ (5)

wherein $Y^4$s may be the same as or different from each other, and each of these is a hydrogen atom or a fluorine atom, and n is an integer of 1 to 8;

$CF_2=CFCF_2R_f^4-X^1$ (6)

wherein

$R_f^4$ is $-(OCF_2)_n-$, $-(OCF(CF_3))_n-$

and n is an integer of 0 to 5;

$CF_2=CFCF_2(OCF(CF_3)CF_2)_m(OCH_2CF_2CF_2)_nOCH_2CF_2X^1$ (7)

wherein m is an integer of 0 to 5, and n is an integer of 0 to 5;

$CF_2=CFCF_2(OCH_2CF_2CF_2)_m(OCF(CF_3)CF_2)_nOCF(CF_3)-X^1$ (8)

wherein m is an integer of 0 to 5, and n is an integer of 0 to 5;

$CF_2=CF(OCF_2CF(CF_3)\ )_mO(CF_2)_n-X^1$ (9)

wherein m is an integer of 0 to 5, and n is an integer of 1 to 8;

$CF_2=CF(OCF_2CF(CF_3))_m-X^1$ (10)

wherein m is an integer of 1 to 5;

$CF_2=CFOCF_2(CF(CF_3)OCF_2)_nCF(-X^1)CF_3$ (11)

wherein n is an integer of 1 to 4;

$CF_2=CFO(CF_2)_nOCF(CF_3)-X^1$ (12)

wherein n is an integer of 2 to 5;

$CF2=CFO\ (CF_2)_n-(C_6H_4)-X^1$ (13)

wherein n is an integer of 1 to 6;

$CF_2=CF(OCF_2CF(CF_3))_nOCF_2CF(CF_3)\ -X^1$ (14)

wherein n is an integer of 1 or 2;

$CH_2=CFCF_2O(CF(CF_3)CF_2O)_nCF(CF_3)-X^1$ (15)

wherein n is an integer of 0 to 5;

$CF_2=CFO(CF_2CF(CF_3)O)_m(CF_2)_n-X^1$ (16)

wherein m is an integer of 0 to 5, and n is an integer of 1 to 3;

$CH_2=CFCF_2OCF\ (CF_3)\ OCF\ (CF_3)-X^1$ (17)

$CH_2=CFCF_2OCH_2CF_2-X^1$ (18)

$CF_2=CFO(CF_2CF(CF_3)O)_mCF_2CF(CF_3)-X^1$ (19)

wherein m is an integer of 0 or greater;

$CF_2=CFOCF\ (CF_3)\ CF_2O\ (CF_2)\ _n-X^1$ (20)

wherein n is an integer of 1 or greater;

$CF_2=CFOCF_2OCF_2CF\ (CF_3)\ OCF_2-X^1$ (21)

$CH_2=CH-(CF_2)_nX^1$ (22)

wherein n is an integer of 2 to 8.
In formulas (5) to (22), $X^1$ is the same as defined above. Each of the monomers may be used alone, or any of these may be used in combination.

The iodine-containing monomer or the bromine-containing monomer represented by formula (4) is preferably an iodine-containing fluorinated vinyl ether represented by formula (23):

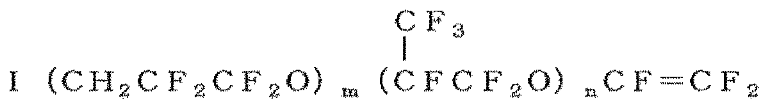

(23)

wherein m is an integer of 1 to 5, and n is an integer of 0 to 3. More specific examples thereof include the following monomers.
$ICH_2CF_2CF_2COCF=CF_2$ $I(CH_2CF_2CF_2O)_2CF=CF_2$, $I(CH_2CF_2CF_2O)_3CF=CF_2$,

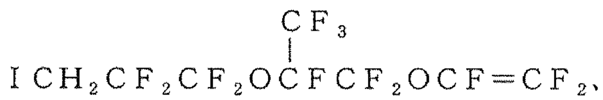

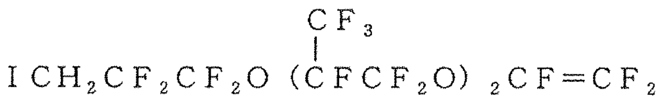

Preferable among these is $ICH_2CF_2CF_2OCF=CF_2$.

Specifically preferable examples of the iodine-containing monomer and the bromine-containing monomer represented by formula (5) include $ICF_2CF_2CF=CH_2$ and $I(CF_2CF_2)_2CF=CH_2$.

Specifically preferable examples of the iodine-containing monomer and the bromine-containing monomer represented by formula (9) include $I(CF_2CF_2)_2OCF=CF_2$.

Specifically preferable examples of the iodine-containing monomer and the bromine-containing monomer represented by formula (22) include $CH_2=CHCF_2CF_2I$ and $I(CF_2CF_2)_2CH=CH_2$.

Further, a bisolefin compound represented by formula:

$R^2R^3C=CR^4-Z-CR^5=CR^6R^7$

wherein $R^2$, $R^3$, $R^4$, $R^5$, $R^6$, and $R^7$ may be the same as or different from each other, and each of these is H or a C1-C5 alkyl group; Z is a C1-C18 linear or branched alkylene or cycloalkylene group which may have an oxygen atom and is preferably at least partially fluorinated, or a (per)fluoropolyoxyalkylene group, is also preferable as a monomer giving a cross-linkable group. The term "(per)fluoropolyoxyalkylene group" herein means a fluoropolyoxyalkylene group or a perfluoropolyoxyalkylene group.

Z is preferably a C4-C12 (per)fluoroalkylene group, and $R^2$, $R^3$, $R^4$, $R^5$, $R^6$, and $R^7$ each are preferably a hydrogen atom.

In the case that Z is a (per)fluoropolyoxyalkylene group, it is preferably a (per)fluoropolyoxyalkylene group represented by formula:

$-(Q)_p-CF_2O-(CF_2CF_2O)_m-(CF_2O)_n-CF_2-(Q)_p-$

wherein Q is a C1-C10 alkylene group or a C2-C10 oxyalkylene group; p is 0 or 1; and m and n are integers which give an m/n ratio of 0.2 to 5 and a molecular weight of the (per)fluoropolyoxyalkylene group of 500 to 10,000, preferably 1,000 to 4,000. In this formula, Q is preferably selected from $-CH_2OCH_2-$ and $-CH_2O(CH_2CH_2O)_sCH_2-$ wherein s = 1 to 3.

Preferable examples of the bisolefin include $CH_2=CH-(CF_2)_4-CH=CH_2$, $CH_2=CH-(CF_2)_6-CH=CH_2$, and those represented by formula:

$CH_2=CH-Z^1-CH=CH_2$

wherein $Z^1$ is $-CH_2OCH_2-CF_2O-(CF_2CF_2O)_m-(CF_2O)_n-CF_2-CH_2OCH_2-$, wherein m/n is 0.5.

Preferable among these is 3, 3, 4, 4, 5, 5, 6, 6, 7, 7, 8, 8-dodecafluoro-1, 9-decadiene represented as $CH_2=CH-(CF_2)_6-CH=CH_2$.

Carbon black (B)

The carbon black (B) is not particularly limited as long as it is a carbon black allowing the fluororubber composition of the present invention, containing the fluororubber (A), the organic amine compound (C1) and/or the acid acceptor (C2), and the cross-linking agent (D) and/or the cross-linking accelerator (E), to give a cross-linked fluororubber product having excellent heat resistance and excellent mechanical properties at high temperatures.

Examples of such a carbon black include furnace black, acetylene black, thermal black, channel black, and graphite. Specific examples thereof include SAF-HS ($N_2SA$: 142 $m^2/g$, DBP: 130 ml/100 g), SAF ($N_2SA$: 142 $m^2/g$, DBP: 115 ml/100 g), N234 ($N_2SA$: 126 $m^2/g$, DBP: 125 ml/100 g), ISAF ($N_2SA$: 119 $m^2/g$, DBP: 114 ml/100 g), ISAF-LS ($N_2SA$: 106 $m^2/g$, DBP: 75 ml/100 g), ISAF-HS ($N_2SA$: 99 $m^2/g$, DBP: 129 ml/100 g), N339 ($N_2SA$: 93 $m^2/g$, DBP: 119 ml/100 g), HAF-LS ($N_2SA$: 84 $m^2/g$, DBP: 75 ml/100 g), HAS-HS ($N_2SA$: 82 $m^2/g$, DBP: 126 ml/100 g), HAF ($N_2SA$: 79 $m^2/g$, DBP: 101 ml/100 g), N351 ($N_2SA$: 74 $m^2/g$, DBP: 127 ml/100 g), LI-HAF ($N_2SA$: 74 $m^2/g$, DBP: 101 ml/100 g), MAF-HS ($N_2SA$: 56 $m^2/g$, DBP: 158 ml/100 g), MAF ($N_2SA$: 49 $m^2/g$, DBP: 133 ml/100 g), FEF-HS ($N_2SA$: 42 $m^2/g$, DBP: 160 ml/100 g), FEF ($N_2SA$: 42 $m^2/g$, DBP: 115 ml/100 g), SRF-HS ($N_2SA$: 32 $m^2/g$, DBP: 140 ml/100 g), SRF-HS ($N_2SA$: 29 $m^2/g$, DBP: 152 ml/100 g), GPF ($N_2SA$: 27 $m^2/g$, DBP: 87 ml/100 g), SRF ($N_2SA$: 27 $m^2/g$, DBP: 68 ml/100 g), SRF-LS ($N_2SA$: 23 $m^2/g$, DBP: 51 ml/100 g), FT ($N_2SA$: 19 $m^2/g$, DBP: 42 ml/100 g), and MT ($N_2SA$: 8 $m^2/g$, DBP: 43 ml/100 g). Each of these carbon blacks may be used alone, or two or more of these may be used in combination.

Particularly preferable as the carbon black is a carbon black having a nitrogen adsorption specific surface area ($N_2SA$) of 5 to 180 $m^2/g$ and a dibutyl phthalate (DBP) oil absorption of 40 to 180 ml/100 g. If a carbon black used has high $N_2SA$ and/or DBP values, the values of the loss modulus E" and the storage modulus E' will be high.

If a carbon black having a nitrogen adsorption specific surface area ($N_2SA$) smaller than 5 $m^2/g$ is mixed into the rubber, the mechanical properties of the rubber tend to be poor. From this viewpoint, the nitrogen adsorption specific surface area ($N_2SA$) is preferably 10 $m^2/g$ or larger, more preferably 20 $m^2/g$ or larger, and particularly preferably 25 $m^2/g$ or larger. The upper limit thereof is preferably 180 $m^2/g$ because of the generally easy availability.

If a carbon black having a dibutyl phthalate (DBP) oil absorption of lower than 40 ml/100 g is mixed into the rubber, the mechanical properties of the rubber tend to be poor. From this viewpoint, the DBP oil absorption is preferably 50 ml/100 g or higher, further preferably 60 ml/100 g or higher, and particularly preferably 80 ml/100 g or higher. The upper limit thereof is preferably 175 ml/100 g, and further preferably 170 ml/100 g because of the generally easy availability.

The amount of the carbon black (B) is preferably 5 to 50 parts by mass to 100 parts by mass of the fluororubber (A). Too large or too small an amount of the carbon black (B) tends to cause poor mechanical properties of a cross-linked product. For good balance of physical properties, the amount thereof is preferably 6 parts by mass or more, and more preferably 10 parts by mass or more, but preferably 49 parts by mass or less, and more preferably 45 parts by mass or less, to 100 parts by mass of the fluororubber (A).

Organic amine compound (C1)

The production method here employs the organic amine compound (C1) in the step of preliminarily mixing a fluororubber (A) and a carbon black (B), in the presence of an organic amine compound (C1) and/or an acid acceptor (C2), and under the condition that a mixed product has a highest temperature Tm of 80 °C to 220 °C while being mixed and being discharged, that is, in the step of mixing the fluororubber (A) and the carbon black (B) to prepare a mixed product wherein the mixed product has a highest temperature Tm of 80°C to 220°C while being mixed and has a highest temperature of 80°C to 220°C upon being discharged. Such a method achieves an excellent effect that the cross-linked product to be produced has improved mechanical properties at high temperatures and improved fatigue properties (such as resistance to fatigue caused by repetitive use) at high temperatures. Addition of an alkylamine compound simply as a processing aid in mixing of a fluororubber, a cross-linking agent, and the like has been known. Such known use of an alkylamine compound, however, is not likely to lead to addition of an organic amine compound at temperatures in the above range in mixing.

A highest temperature Tm of the mixed product lower than 80°C at the time of addition of the organic amine compound (C1) decreases the reinforceability unfavorably. The lower limit of the highest temperature Tm is preferably 90°C, more preferably 95°C, and particularly preferably 100°C. The upper limit thereof is 220°C, and a highest temperature Tm higher than that causes an unfavorable phenomenon that the organic amine compound is volatilized. The upper limit of the highest temperature Tm is preferably 215°C, more preferably 210°C, and particularly preferably 200°C.

Preferable examples of the organic amine compound (C1) include primary amines represented as $R^1NH_2$, secondary amines represented as $R^1R^2NH$, and tertiary amine represented as $R^1R^2R^3N$. $R^1$, $R^2$, and $R^3$ may be the same as or different from each other and each of these is preferably a C1-C50 alkyl group. The alkyl group may have a benzene ring as a functional group, or may have a double bond and/or conjugated double bond. Further, the alkyl group may have a linear shape or a branched shape.

Examples of the primary amine include coconut amine, octyl amine, lauryl amine, stearyl amine, oleyl amine, beef tallow amine, 17-phenyl-heptadecylamine, octadeca-7,11-dienylamine, octadeca-7,9-dienylamine, octadec-9-enylamine, and 7-methyl-octadec-7-enylamine. Examples of the secondary amine include distearylamine. Examples of the tertiary amine include dimethyloctylamine, dimethyldecylamine, dimethyllaurylamine, dimethylmyristylamine, dimethylpalmitylamine, dimethylstearylamine, and dimethylbehenylamine. Particularly preferable are amines, especially primary amines, having about 20 carbon atoms because they are easily available and they improve reinforceability.

The amount of the organic amine compound (C1) is preferably 0.01 to 10 parts by mass, and more preferably 0.01 to 5 parts by mass, to 100 parts by mass of the fluororubber (A). Too large an amount of the organic amine compound (C1) tends to cause difficulty in mixing, while too small an amount thereof tends to cause poor reinforceability. The amount with respect to 100 parts by mass of the fluororubber (A) is further preferably 0.1 parts by mass or more from the viewpoint of reinforceability and 4 parts by mass or less from the viewpoints of reinforceability and easy mixing.

Acid acceptor (C2)

The production method here employs the acid acceptor (C2) in the step of preliminarily mixing a fluororubber (A) and a carbon black (B), in the presence of an organic amine compound (C1) and/or an acid acceptor (C2), and under the condition that a mixed product has a highest temperature Tm of 80 °C to 220 °C while being mixed and being discharged, that is, in the step of mixing the fluororubber (A) and the carbon black (B) to prepare a mixed product wherein the mixed product has a highest temperature Tm of 80°C to 220°C while being mixed and has a highest temperature of 80°C to 220°C upon being discharged. Such a method achieves an excellent effect that the cross-linked product has improved mechanical properties at high temperatures and improved fatigue properties (such as resistance to fatigue caused by repetitive use) at high temperatures. Use of calcium hydroxide, magnesium oxide, or hydrotalcite as an acid acceptor in cross-linking has been known. Such use of an acid acceptor, however, is not likely to lead to addition of an acid acceptor at temperatures in the above range in mixing.

A highest temperature Tm of the mixed product lower than 80°C at the time of addition of the acid acceptor (C2) unfavorably decreases the reinforceability. The lower limit of the highest temperature Tm is preferably 90°C, more preferably 95°C, and particularly preferably 100°C. The upper limit thereof is 220°C, and a highest temperature Tm higher than that unfavorably decreases the physical properties. The upper limit of the highest temperature Tm is preferably 215°C, more preferably 210°C, and particularly preferably 200°C.

Examples of the acid acceptor (C2) used in the present invention include calcium oxide, magnesium oxide, lead oxide, zinc oxide, magnesium hydroxide, calcium hydroxide, aluminum hydroxide, and hydrotalcite. Each of these may be used alone, or two or more of these may be appropriately used in combination. The acid acceptor (C2) is preferably a metal hydroxide such as calcium hydroxide; a metal oxide such as a magnesium oxide and zinc oxide; or hydrotalcite among the aforementioned examples from the viewpoint of reinforceability, for example. Particularly, zinc oxide is preferable.

The amount of the acid acceptor (C2) is preferably 0.01 to 10 parts by mass to 100 parts by mass of the fluororubber (A). Too large an amount of the acid acceptor (C2) tends to bring difficulty in mixing, while too small an amount thereof tends to cause poor reinforceability. The amount with respect to 100 parts by mass of the fluororubber (A) is further preferably 0.1 parts by mass or more from the viewpoint of reinforceability, while it is preferably 8 parts by mass or less, and more preferably 5 parts by mass or less, from the viewpoints of physical properties and easy mixing.

In the mixing of the fluororubber (A) and the carbon black (B) at a highest temperature Tm of 80°C to 220°C in the present invention, it is preferable that, the organic amine compound (C1) and/or the acid acceptor (C2) are/is not added after mixing of the fluororubber (A) and the carbon black (B); the fluororubber (A) and the carbon black (B) are mixed in the presence of the organic amine compound (C1) and/or the acid acceptor (C2), i.e., it is preferable that, the fluororubber (A), the carbon black (B), the organic amine compound (C1) and/or the acid acceptor (C2) are mixed at one step. Such mixing provides an excellent effect of producing a rubber composition that gives a cross-linked product having improved mechanical properties at high temperatures and fatigue properties (such as resistance to fatigue caused by repetitive use) at high temperatures.

Of the organic amine compound (C1) and the acid acceptor (C2), the organic amine compound (C1) is more preferable, and an alkylamine compound is particularly preferable in terms of the fatigue properties (such as resistance to fatigue caused by repetitive use) at high temperatures.

The method of producing a fluororubber composition according to the present invention is not particularly limited with regard to the addition order of the other components in mixing or the number of times of the mixing, and can be a

common rubber mixing method, as long as the method includes the step of preliminarily mixing a fluororubber (A) and a carbon black (B), in the presence of an organic amine compound (C1) and/or an acid acceptor (C2), and under the condition that a mixed product has a highest temperature Tm of 80 °C to 220 °C while being mixed and being discharged, that is, the step of mixing the fluororubber (A) and the carbon black (B) in the presence of the organic amine compound (C1) and/or the acid acceptor (C2) wherein the mixed product has a highest temperature Tm of 80°C to 220°C while being mixed and has a highest temperature of 80°C to 220°C upon being discharged.

Specific examples thereof include, but not limited to, the following methods.

(1) A method in which predetermined amounts of a fluororubber (A), a carbon black (B), an organic amine compound (C1) and/or an acid acceptor (C2), are charged into a closed mixer, and then mixed under conditions that an average shear rate of a rotor is 50 to 1,000 (1/second), preferably 100 to 1,000 (1/second), and further preferably 200 to 1,000 (1/second), and the highest temperature Tm is 80°C to 220°C. Examples of the closed mixer include a pressurizing kneader, Banbury mixer, single screw mixer, and twin screw mixer.

(2) A method in which predetermined amounts of a fluororubber (A), a carbon black (B), an organic amine compound (C1) and/or an acid acceptor (C2), are charged into a roll mixer, and then mixed under the conditions that the average shear rate of a rotor is 50 (1/second) or higher and the highest temperature Tm is 80°C to 220°C.

The fluororubber compositions obtained by the above methods (1) and (2) are free from components such as a cross-linking agent (and/or a cross-linking aid) and a cross-linking accelerator. Further, the mixing of the methods (1) and (2) may be performed multiple times. In the case of performing the mixing multiple times, the mixing conditions of the second and subsequent mixing may be the same as those in the methods (1) and (2) except that the highest temperature Tm is 140°C or lower.

One example of the method for preparing a cross-linkable fluororubber composition is a method in which the fluororubber composition, obtained in the method (1) or (2) or by repeating the method (1) or (2) multiple times, is further blend-mixed with the cross-linking agent (D) (and/or the cross-linking aid (F)) and the cross-linking accelerator (E).

The cross-linking agent (D) (and/or the cross-linking aid (F)) and the cross-linking accelerator (E) may be blend-mixed at the same time, or the cross-linking accelerator (E) may be first blend-mixed and then the cross-linking agent (D) may be blend-mixed. The conditions for mixing the cross-linking agent (D) (and/or the cross-linking aid (F)) and the cross-linking accelerator (E) may be the same as those in the methods (1) and (2) except that the highest temperature Tm is 130°C or lower.

Another example of the method for preparing a cross-linkable fluororubber composition is a method in which predetermined amounts of the fluororubber (A), the carbon black (B), the organic amine compound (C1) and/or the acid acceptor (C2), the cross-linking agent (D) (and/or the cross-linking aid (F)), and the cross-linking accelerator (E) are charged into a roll mixer in an appropriate order, and then mixed under the conditions that the average shear rate of a rotor is 50 (1/second) or higher and the highest temperature Tm is 80°C to 130°C.

In the case of the polyol cross-link system, a uniform dispersant prepared by preliminarily mixing the fluororubber (A), the cross-linking agent (D), and the cross-linking accelerator (E) may be used. For example, the fluororubber (A), a polyol cross-linking agent, and a cross-linking accelerator are first mixed, and then the carbon black (B) and the organic amine compound (C1) are mixed thereinto. The highest temperature Tm here is 80°C to 220°C. Finally, an acid acceptor is added thereto and the highest temperature Tm is decreased to 130°C or lower. The mixing is more preferably performed at an average shear rate of 50 (1/second) or higher.

The preferable fluororubber composition of the present invention before cross-linking has a difference $\delta G'$ (G'(1%) - G'(100%)) of 120 kPa or higher and 3,000 kPa or lower, the difference determined by subtracting the shear modulus G'(100%) at 100% dynamic strain from the shear modulus G'(1%) at 1% dynamic strain in a dynamic viscoelasticity test with a rubber process analyzer under the conditions of a measurement frequency of 1 Hz and a measurement temperature of 100°C. In the case of performing the aforementioned pre-mixing (such as the mixing by the above methods (1) and (2)), the pre-mixture preferably has the above difference $\delta G'$.

The difference $\delta G'$ is used as a standard for evaluating the property of reinforcement of the rubber composition, and is determined by a dynamic viscoelasticity test with a rubber process analyzer.

A fluororubber composition having a difference $\delta G'$ in the range of 120 kPa or higher and 3,000 kPa or lower has an advantageous normal state at room temperature, mechanical properties at high temperatures, fatigue properties at high temperatures, and the like.

The difference $\delta G'$ is preferably 150 kPa or higher, and further preferably 160 kPa or higher, but preferably 2,800 kPa or lower, and further preferably 2,500 kPa or lower, for good properties such as a normal state at room temperature, mechanical properties at high temperatures, and fatigue properties at high temperatures.

The mixing is preferably performed at an average shear rate of 50 (1/second) to form a good carbon gel network reinforcing structure such that a fluororubber composition having the later-described specific difference $\delta G'$ or a cross-linked product having the later-described specific loss modulus E" and storage modulus E' is obtained.

The average shear rate (1/second) is calculated by the following formula.

$$\text{Average shear rate (1/second)} = (\pi \times D \times R)/(60 \text{ (seconds)} \times c)$$

wherein

D: rotor diameter or roll diameter (cm)
R: rotation rate (rpm)
c: tip clearance (cm, gap distance between rotor and casing or gap distance between rolls)

Examples of the cross-linking agent (D) and the cross-linking accelerator (E) constituting the cross-linkable rubber composition include the following compounds.

Cross-linking agent (D)

The cross-linking agent (D) may be appropriately selected depending on the cross-link system, the kind of the fluororubber (A) to be cross-linked (e.g. composition of copolymerization, presence of a cross-linkable group and the kind thereof), the specific applications and the usage pattern of the cross-linked product to be obtained, and the mixing and other conditions.

Examples of the cross-link system include a peroxide cross-link system, polyol cross-link system, polyamine cross-link system, oxazole cross-link system, thiazole cross-link system, imidazole cross-link system, and triazine cross-link system.

(Peroxide cross-link system)

In the case that cross-linking is performed by the peroxide cross-link system, the cross-linking site has a carbon-carbon bond; thus, the system is superior in chemical resistance and steam resistance compared with the polyol cross-link system in which the cross-linking site has a carbon-oxygen bond and the polyamine cross-link system in which the cross-linking site has a carbon-nitrogen double bond.

The cross-linking agent of the peroxide cross-link system may be any peroxide capable of easily generating a peroxy radical in the presence of heat or a redox system. Specific examples thereof include organic peroxides such as 1,1-bis(t-butylperoxy)-3,5,5-trimethylcyclohexane, 2,5-dimethylhexane-2,5-dihydroperoxide, di-t-butyl peroxide, t-butylcumyl peroxide, dicumyl peroxide, $\alpha,\alpha$-bis(t-butylperoxy)-p-diisopropylbenzene, $\alpha,\alpha$-bis(t-butylperoxy)-m-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxybenzoate, t-butylperoxy maleic acid, and t-butylperoxyisopropyl carbonate. Preferable among these is 2,5-dimethyl-2,5-di(t-butylperoxy)hexane or 2,5-dimethyl-2,5-di(t-butylperoxy)-hexyne-3.

Further, in the peroxide cross-link system, it is generally preferable to use a cross-linking accelerator (E1). Examples of the cross-linking accelerator for peroxide cross-linking agents, especially organoperoxide cross-linking agents, include triallyl cyanurate, triallyl isocyanurate (TAIC), triacryl formal, triallyl trimellitate, maleimide, N-phenylene maleimide, N,N'-m-phenylene bismaleimide, p-quinonedioxime, p,p'-dibenzoylquinonedioxime, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinyl methyltrisiloxane, tri(5-norbornene-2-methylene)cyanurate, triallyl phosphite, trimethallyl isocyanurate (TMAIC), and 3,3,4,4,5,5,6,6,7,7,8,8-dodecafluoro-1,9-decadiene. Preferable among these are triallyl isocyanurate (TAIC), trimethallyl isocyanurate (TMAIC), 3,3,4,4,5,5,6,6,7,7,8,8-dodecafluoro-1,9-decadiene, maleimide, N,N'-m-phenylene bismaleimide, p-quinonedioxime, and p,p'-dibenzoylquinonedioxime, from the viewpoints of their cross-linkability and physical properties of cross-linked products.

A perfluoro fluororubber and a non-perfluoro fluororubber having at least a TFE unit, a VdF unit, or a fluorine-containing monomer unit of formula (1) may be suitably used as the fluororubber (A) for the peroxide cross-link system. Particularly preferable is at least one rubber selected from VdF rubbers and TFE/Pr rubbers.

From the viewpoint of cross-linkability, the fluororubber (A) suitable for the peroxide cross-link system is preferably a fluororubber having an iodine atom and/or a bromine atom at a cross-linking site. The amount of an iodine atom and/or a bromine atom is preferably 0.001 to 10% by mass, further preferably 0.01 to 5% by mass, and particularly preferably 0.01 to 3% by mass.

The amount of the peroxide cross-linking agent is preferably 0.01 to 10 parts by mass, and more preferably 0.1 to 9 parts by mass, to 100 parts by mass of the fluororubber (A). If the amount of the peroxide cross-linking agent is less than 0.01 parts by mass, cross-linking of the fluororubber (A) does not tend to proceed sufficiently. In contrast,

if the amount thereof is more than 10 parts by mass, the balance of physical properties tends to be poor.

Further, the amount of the cross-linking accelerator (E1) is 0.01 to 10 parts by mass, and preferably 0.1 to 5 parts by mass, to 100 parts by mass of the fluororubber (A). If the amount of the cross-linking accelerator is less than 0.01 parts by mass, cross-linking tends to take too long a time which may be impractical. In contrast, if the amount thereof is more than 10 parts by mass, cross-linking tends to proceed too rapidly, as well as cause poor balance of physical properties. The upper limit of the amount of the cross-linking accelerator (E1) is preferably 9 parts by mass, more preferably 8 parts by mass, furthermore preferably less than 8 parts by mass, and particularly preferably 7 parts by mass.

(Polyol cross-link system)

In the case of cross-linking by the polyol cross-link system, the cross-linking site has a carbon-oxygen bond, compression set is low, and formability is excellent. Therefore, this cross-link system is preferable.

The polyol cross-linking agent may be a compound conventionally known as a cross-linking agent for fluororubber. Suitably used is a polyhydroxy compound, especially a polyhydroxyaromatic compound, for example, because of its excellent heat resistance.

The polyhydroxyaromatic compound is not particularly limited. Examples thereof include 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valerate, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxyaromatic compounds may be alkaline metal salts or alkaline earth metal salts; in the case of coagulating copolymers using an acid, it is preferable not to use the metal salts.

Of these compounds, polyhydroxy compounds are preferable because of a low compression set of a cross-linked product to be obtained and excellent formability; polyhydroxyaromatic compounds are more preferable because of excellent heat resistance; and bisphenol AF is further preferable.

Further, in the polyol cross-link system, it is generally preferable to use a cross-linking accelerator (E2). A cross-linking accelerator accelerates generation of double bonds in molecules in defluorination reaction of the main chain of the fluororubber and addition of the polyhydroxy compound to the generated double bonds, so that the cross-linking reaction is accelerated.

A generally used cross-linking accelerator (E2) of the polyol cross-link system is an onium compound. The onium compound is not particularly limited. Examples thereof include ammonium compounds such as quaternary ammonium salts, phosphonium compounds such as quaternary phosphonium salts, oxonium compounds, sulfonium compounds, cyclic amines, and monofunctional amine compounds. Preferable among these are quaternary ammonium salts and quaternary phosphonium salts.

The quaternary ammonium salts are not particularly limited. Examples thereof include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methylsulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as DBU-B), 8-benzyl-1,8-diazabicyclo[5,4,0]-7-undecenium hydroxide, 8-phenethyl-1,8-diazabicyclo[5,4,0]-7-undecenium chloride, and 8-(3-phenylpropyl)-1,8-diazabicyclo[5,4,0]-7-undecenium chloride. Preferable among these is DBU-B because of its cross-linkability and physical properties of a cross-linked product.

The quaternary phosphonium salts are not particularly limited. Examples thereof include tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Preferable among these is benzyltriphenylphosphonium chloride (BTPPC) because of its cross-linkability and physical properties of a cross-linked product.

In addition, a molten salt of a quaternary ammonium salt or a quaternary phosphonium salt and bisphenol AF, or a chlorine-free cross-linking accelerator disclosed in JP 11-147891 A may be used as the cross-linking accelerator (E2).

A perfluoro fluororubber and a non-perfluoro fluororubber having at least a TFE unit, a VdF unit, or a fluorine-containing monomer unit of formula (1) may be suitably used as the fluororubber (A) suitable for the polyol cross-link system. Particularly preferable is at least one rubber selected from VdF rubbers and TFE/Pr rubbers.

The amount of the polyol cross-linking agent is preferably 0.01 to 10 parts by mass, and more preferably 0.1

to 7 parts by mass, to 100 parts by mass of the fluororubber (A). If the amount of the polyol cross-linking agent is less than 0.01 parts by mass, the fluororubber (A) tends to be insufficiently cross-linked, while if the amount thereof is more than 10 parts by mass, the balance of physical properties tends to be poor.

The amount of the cross-linking accelerator (E2) is preferably 0.01 to 8 parts by mass, and more preferably 0.02 to 5 parts by mass, to 100 parts by mass of the fluororubber (A). If the amount of the cross-linking accelerator is less than 0.01 parts by mass, cross-linking of the fluororubber (A) does not tend to proceed sufficiently. In contrast, if the amount thereof is more than 8 parts by mass, the balance of physical properties tends to be poor.

(Polyamine cross-link system)

In the case of polyamine cross-linking, the cross-linking site has a carbon-nitrogen double bond and dynamic mechanical properties are excellent. However, the compression set tends to be high in comparison with the case of cross-linking using a polyol cross-linking or peroxide cross-linking agent.

Examples of the polyamine cross-linking agent include polyamine compounds such as hexamethylenediamine carbamate, N,N'-dicinnamylidene-1,6-hexamethylenediamine, and 4,4'-bis(aminocyclohexyl)methane carbamate. Preferable among these is N,N'-dicinnamylidene-1,6-hexamethylenediamine.

Any perfluoro fluororubber or non-perfluoro fluororubber at least having a TFE unit, a VdF unit, or a fluorine-containing monomer unit of formula (1) may be used as the fluororubber (A) suitable for the polyamine cross-link system. In particular, a VdF rubber or a TFE/Pr rubber is preferable.

The amount of the polyamine cross-linking agent is preferably 0.01 to 10 parts by mass, and more preferably 0.2 to 7 parts by mass, to 100 parts by mass of the fluororubber (A). If the amount of the polyamine cross-linking agent is less than 0.01 parts by mass, cross-linking of the fluororubber (A) does not tend to proceed sufficiently. In contrast, if the amount thereof is more than 10 parts by mass, the balance of physical properties tends to be poor.

(Oxazole cross-link system, thiazole cross-link system, and imidazole cross-link system)

The oxazole cross-link system, thiazole cross-link system, and imidazole cross-link system are cross-link systems with a low compression set and excellent heat resistance.

Examples of the cross-linking agent used in the oxazole cross-link system, thiazole cross-link system, and imidazole cross-link system include:

compounds having at least two cross-linkable reaction groups represented by formula (24):

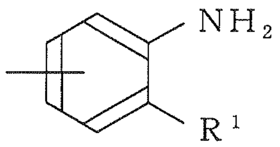

(24)

wherein $R^1$s may be the same as or different from each other and each are $-NH_2$, $-NHR^2$, -OH, or -SH; $R^2$ is a fluorine atom or a monovalent organic group;

compounds represented by formula (25):

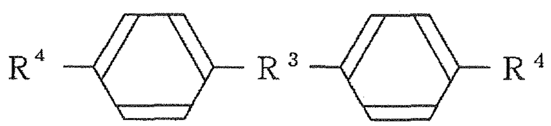

(25)

wherein $R^3$ is $-SO_2-$, -O-, -CO-, a C1-C6 alkylene group, a C1-C10 perfluoroalkylene group, or a single bond, and

$R^4$ is 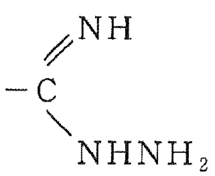 or 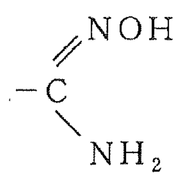 ;

compounds represented by formula (26):

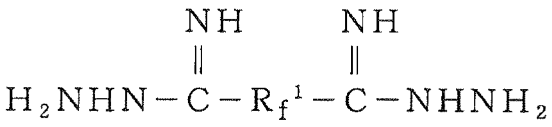 (26)

wherein $R_f^1$ is a C1-C10 perfluoroalkylene group; and compounds represented by formula (27):

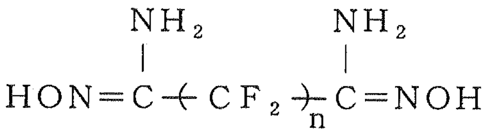 (27)

wherein n is an integer of 1 to 10.

Specific examples of the cross-linking agent include:

compounds each of which has two cross-linkable reaction groups represented by formula (24) and each of which is represented by formula (28):

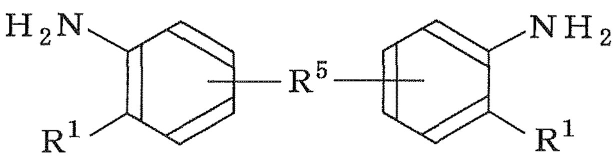 (28)

wherein $R^1$ is as defined above; $R^5$ is $-SO_2-$, -O-, -CO-, a C1-C6 alkylene group, a C1-C10 perfluoroalkylene group, a single bond, or a group represented by formula:

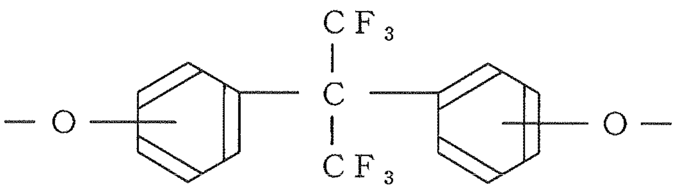 ,

2,2-bis(3-amino-4-hydroxyphenyl)hexafluoropropane, 2,2-bis(3-amino-4-mercaptophenyl)hexafluoropropane, 2,2-bis(3,4-diaminophenyl)hexafluoropropane, and compounds represented by formula (29):

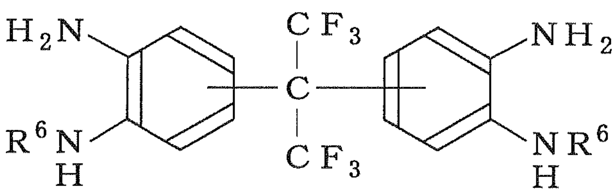 (29)

wherein $R^6$s are the same as or different from each other and each of these is a C1-C10 alkyl group; a C1-C10 alkyl group having a fluorine atom; a phenyl group; a benzyl group; or a phenyl group or a benzyl group in which 1 to 5 hydrogen atoms are replaced by a fluorine atom and/or $-CF_3$.

Non-limitative specific examples thereof include bisaminophenol cross-linking agents such as 2,2-bis(3,4-diaminophenyl)hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-phenylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane.

Further preferable among the above cross-linking agents are 2,2-bis(3-amino-4-hydroxyphenyl)hexafluoropropane(OH-AF), 2,2-bis[3-amino-4-(N-phenylamino)phenyl]hexafluoropropane(Nph-AF), and 2,2-bis(3,4-diaminophenyl) hexafluoropropane(TA-AF) because of excellent heat resistance and particularly good cross-linking reactivity.

In these oxazole cross-link system, thiazole cross-link system, and imidazole cross-link system, a cross-linking aid (F) may be used in combination for greatly increased cross-linking rate.

Examples of the cross-linking aid (F) used together in the oxazole cross-link system, thiazole cross-link system, and imidazole cross-link system include (F1) compounds generating ammonia at 40°C to 330°C and (F2) particulate inorganic nitride.

(F1) Compounds generating ammonia at 40°C to 330°C

(ammonia-generating compounds)

The ammonia-generating compound (F1) leads to curing as ammonia generated at cross-linking reaction temperature (40°C to 330°C) causes cross-linking, and also accelerates curing by a cross-linking agent. There are compounds which react with a slight amount of water to generate ammonia.

Preferable examples of the ammonia-generating compound (F1) include urea or derivatives thereof and ammonium salts. The ammonium salt may be an organic ammonium salt or may be an inorganic ammonium salt.

The derivatives of urea include urea, as well as urea derivatives such as biurea, thiourea, urea hydrochlorides, and biuret.

Examples of the organic ammonium salt include compounds disclosed in JP 9-111081 A, WO 00/09603, and WO 98/23675, such as ammonium salts of polyfluorocarboxylic acids e.g. ammonium perfluorohexanoate and ammonium perfluorooctanoate; ammonium salts of polyfluorosulfonic acids e.g. ammonium perfluorohexanesulfonate and ammonium perfluorooctanesulfonate; ammonium salts of polyfluoroalkyl group-containing phosphoric acids and phosphonic acids e.g. ammonium perfluorohexanephosphate and ammonium perfluorooctanephosphate; and ammonium salts of non-fluorocarboxylic acids and non-fluorosulfonic acids e.g. ammonium benzoate, ammonium adipate, and ammonium phthalate. Preferable among these are ammonium salts of fluorocarboxylic acids, fluorosulfonic acids, and fluorophosphoric acids from the viewpoint of dispersibility; from the viewpoint of low cost, preferable among these are ammonium salts of non-fluorocarboxylic acids, non-fluorosulfonic acids, and non-fluorophosphoric acids.

Examples of the inorganic ammonium salt include compounds disclosed in JP 9-111081 A, such as ammonium sulfate, ammonium carbonate, ammonium nitrate, and ammonium phosphate. Preferable among these is ammonium phosphate in consideration of vulcanization characteristics.

In addition, acetaldehyde ammonia, hexamethylenetetramine, formamidine, formamidine hydrochloride, formamidine acetate, t-butylcarbamate, benzylcarbamate, $HCF_2CF_2CH(CH_3)OCONH_2$, and phthalamide can be used.

Each of these ammonia-generating compounds (F1) may be used alone, or two or more of these may be used in combination.

(F2) Particulate inorganic nitride

The particulate inorganic nitride (F2) is not particularly limited. Examples thereof include silicon nitride ($Si_3N_4$), lithium nitride, titanium nitride, aluminum nitride, boron nitride, vanadium nitride, and zirconium nitride. Preferable among these is particulate silicon nitride because nano-size fine particles can be provided. Each of these particulate nitrides may be used alone, or two or more of these may be used in combination.

The particle diameter of the particulate inorganic nitride (F2) is not particularly limited; it is preferably 1000 nm or smaller, more preferably 300 nm or smaller, and further preferably 100 nm or smaller. The lower limit thereof is not particularly limited.

These particulate inorganic nitrides (F2) may be used in combination with an ammonia-generating compound (F1).

These oxazole cross-link system, thiazole cross-link system, and imidazole cross-link system are used for the following VdF rubber having a specific cross-linkable group and TFE/Pr rubber having a specific cross-linkable group.

(VdF rubber having specific cross-linkable group)

The specific VdF rubber is a VdF rubber which is a copolymer of VdF, at least one (per)fluoroolefin selected from TFE, HFP, and (per)fluoro(vinyl ether), and a monomer having a cyano group, carboxyl group, or alkoxycarbonyl group.

Here, it is important that the copolymerization ratio of the VdF is higher than 20 mol% in order to reduce weakness at low temperatures.

With respect to the (per)fluoro(vinyl ether), one of the following compounds may be used or two or more of these may be used in combination. The compounds are those represented by formula (30):

$CF_2=CFO (CF_2CFY^2O) p- (CF_2CF_2CF_2O)_q-R_f^5$ (30)

wherein $Y^2$ is a fluorine atom or $-CF_3$, $R_f^5$ is a C1-C5 perfluoroalkyl group, p is an integer of 0 to 5, and q is an integer of 0 to 5, or those represented by formula (31):

$CFX=CXOCF_2OR$ (31)

wherein X is F or H, R is a C1-C6 linear or branched fluoroalkyl group, a C5-C6 cyclic fluoroalkyl group, or a fluorooxyalkyl group, and 1 or 2 atoms selected from H, Cl, Br, and I may be included therein.

Preferable among those represented by formulas (30) and (31) are perfluoro(methyl vinyl ether) or perfluoro(propyl vinyl ether), and in particular perfluoro(methyl vinyl ether).

Each of these may be used alone, or any of these may be used in combination.

The copolymerization ratio of the VdF and the specific perfluoroolefin is not limited as long as the ratio of the VdF is higher than 20 mol%. A preferable VdF rubber contains 45 to 85 mol% of the VdF and 55 to 15 mol% of the specific perfluoroolefin, and a more preferable VdF rubber contains 50 to 80 mol% of the VdF and 50 to 20 mol% of the specific perfluoroolefin.

Specifically, the combination of the VdF and the specific perfluoroolefin is preferably at least one copolymer selected from a VdF/HFP copolymer, VdF/HFP/TFE copolymer, VdF/PAVE copolymer, VdF/TFE/PAVE copolymer, VdF/HFP/PAVE copolymer, and VdF/HFP/TFE/PAVE copolymer.

In the VdF/HFP copolymer, the VdF/HFP composition is preferably 45 to 85/55 to 15 mol%, more preferably 50 to 80/50 to 20 mol%, and further preferably 60 to 80/40 to 20 mol%.

In the VdF/TFE/HFP copolymer, the VdF/TFE/HFP composition is preferably 40 to 80/10 to 35/10 to 35 mol%.

In the VdF/PAVE copolymer, the VdF/PAVE composition is preferably 65 to 90/35 to 10 mol%.

In the VdF/TFE/PAVE copolymer, the VdF/TFE/PAVE composition is preferably 40 to 80/3 to 40/15 to 35 mol%.

In the VdF/HFP/PAVE copolymer, the VdF/HFP/PAVE composition is preferably 65 to 90/3 to 25/3 to 25 mol%.

In the VdF/HFP/TFE/PAVE copolymerization, the VdF/HFP/TFE/PAVE composition is preferably 40 to 90/0 to 25/0 to 40/3 to 35, and more preferably 40 to 80/3 to 25/3 to 40/3 to 25 mol%.

The amount of the monomer having a cyano group, carboxyl group, or alkoxycarbonyl group is preferably 0.1 to 5 mol%, and more preferably 0.3 to 3 mol%, in the total amount of the VdF and the specific perfluoroolefin for good cross-linking characteristics and heat resistance.

Examples of the monomer having a cyano group, carboxyl group, or alkoxycarbonyl group include monomers represented by formulas (32) to (35):

$CY^1_2=CY^1 (CF_2)_n-X^1$ (32)

wherein $Y^1$s may be the same as or different from each other, and each of these is a hydrogen atom or a fluorine atom, and n is an integer of 1 to 8;

$CF_2=CFCF_2R_f^6-X^1$ (33)

wherein $R_f^6$ is $- (OCF_2)_n-$ or $- (OCF (CF_3) )_n-$, and n is an integer of 0 to 5;

$CF_2=CF(OCF_2CF(CF_3) )_mO(CF_2)_n-X^1$ (34)

wherein m is an integer of 0 to 5, and n is an integer of 1 to 8; and

$CF_2=CF(OCF_2CF(CF_3)\}_mX^1$ (35)

wherein m is an integer of 1 to 5.

In formulas (32) to (35), $X^1$ is a cyano group (-CN group), carboxyl group (-COOH group), or alkoxycarbonyl group (-COOR group, R is a C1-C10 alkyl group optionally having a fluorine atom). Each of these may be used alone, or any of these may be used in combination.

The VdF rubber having these specific cross-linkable groups may be produced by a common method.

These cross-linkable groups may be incorporated by the method disclosed in WO 00/05959.

The VdF rubber having a specific cross-linkable group preferably has a Mooney viscosity ($ML_{1+10}$(121°C)) of

5 to 140, further preferably 5 to 120, and particularly preferably 5 to 100, for good processibility.

(TFE/Pr rubber having specific cross-linkable group)

The TFE/Pr rubber having a specific cross-linkable group is a non-perfluoro fluororubber having 40 to 70 mol% of TFE units, 30 to 60 mol% of Pr units, and monomer units having cyano groups, carboxyl groups, or alkoxycarbonyl groups.

The rubber may have 0 to 15 mol% of VdF units and/or 0 to 15 mol% of PAVE units if necessary.

The amount of the TFE units is 40 to 70 mol%, and preferably 50 to 65 mol%; the TFE units in such an amount provide elastomeric properties with Pr units.

The amount of the Pr units is 30 to 60 mol%, and preferably 35 to 50 mol%; the Pr units in such an amount provide elastomeric properties with TFE units.

With respect to the monomers having a cyano group, carboxyl group, or alkoxycarbonyl group, the monomers mentioned as preferable for the VdF rubber having a specific cross-linkable group can be also used for the TFE/Pr rubber having a specific cross-linkable group.

The amount of the VdF units or PAVE units, which are not essential units, is preferably up to 15 mol%, and further preferably up to 10 mol%. A larger amount of the former units causes poor amine resistance, while a larger amount of the latter units causes high cost.

The TFE/Pr rubber having a specific cross-linkable group has a Mooney viscosity ($ML_{1+10}$(121°C)) of 5 to 100. A Mooney viscosity of less than 5 causes poor cross-linkability, so that a cross-linked rubber cannot tend to have sufficient physical properties. In contrast, a Mooney viscosity of higher than 100 causes poor fluidity, and thus tends to cause poor molding processibility. The Mooney viscosity ($ML_{1+10}$ (121°C) ) is preferably 10 to 80.

The TFE/Pr rubber having a specific cross-linkable group may be produced by a common emulsion polymerization method, but the polymerization rate of TFE and Pr is relatively slow in this method. In the two-step polymerization (seed polymerization) method, for example, the rubber can be efficiently produced.

The amount of the oxazole, thiazole, or imidazole cross-linking agent is preferably 0.1 to 20 parts by mass, and more preferably 0.5 to 10 parts by mass, to 100 parts by mass of the specific fluororubber. If the amount of the cross-linking agent is less than 0.1 parts by mass, the mechanical strength, heat resistance, and chemical resistance tend not to be sufficient for practical use. In contrast, if the amount thereof is more than 20 parts by mass, cross-linking tends to take a long time and a cross-linked product tends to be hard, likely resulting in flexibility loss.

In the case of using a cross-linking aid (F) in combination in these oxazole cross-link system, thiazole cross-link system, and imidazole cross-link system, the amount of the cross-linking aid (F) is 0.01 to 10 parts by mass, preferably 0.02 to 5 parts by mass, and more preferably 0.05 to 3 parts by mass, to 100 parts by mass of the aforementioned specific fluororubber, in general.

(Triazine cross-link system)

The triazine cross-link system is a cross-link system which causes a low compression set and excellent heat resistance. In the triazine cross-link system, only a cross-linking aid (F) that initiates cross-linking reaction is used.

Examples of the cross-linking aid (F) used in the triazine cross-link system include (F1) compounds generating ammonia at 40°C to 330°C and (F2) particulate inorganic nitrides which are cross-linking aids capable of being used together with a cross-linking agent in the oxazole cross-link system, thiazole cross-link system, and imidazole cross-link system.

Of the specific cross-linkable group-containing fluororubbers which are the targets of the oxazole cross-link system, thiazole cross-link system, and imidazole cross-link system, the preferable target of the triazine cross-link system is a fluororubber in which at least one cross-linkable group is a cyano group.

The amount of the ammonia-generating compound (F1) may be appropriately adjusted depending on the amount of ammonia to be generated. In general, the amount thereof is 0.05 to 10 parts by mass, preferably 0.1 to 5 parts by mass, and more preferably 0.2 to 3 parts by mass, to 100 parts by mass of the cyano group-containing fluororubber. Too small an amount of the ammonia-generating compound tends to cause a low cross-linking density, so that the heat resistance and chemical resistance tend to be insufficient for practical use. In contrast, too large an amount thereof may cause scorch, so that the storage stability tends to be poor.

The amount of the particulate inorganic nitride (F2) is 0.1 to 20 parts by mass, preferably 0.2 to 5 parts by mass, and more preferably 0.2 to 1 parts by mass, to 100 parts by mass of the cyano group-containing fluororubber. If the amount of the particulate inorganic nitride (F2) is less than 0.1 parts by mass, the vulcanization density tends to be low, and thus the heat resistance and chemical resistance tend to be insufficient for practical use. If the amount thereof is more than 20 parts by mass, scorch may occur, and therefore the storage stability tends to be poor.

In the present invention, the cross-link system is preferably the peroxide cross-link system, polyol cross-link

system, oxazole cross-link system, thiazole cross-link system, imidazole cross-link system, or triazine cross-link system. Particularly preferable is the peroxide cross-link system, oxazole cross-link system, thiazole cross-link system, imidazole cross-link system, or triazine cross-link system. In the respective cross-link systems, it is preferable to use a suitable cross-linking agent (D), cross-linking accelerator (E) or cross-linking aid (F).

If necessary, the fluororubber composition of the present invention may further contain common additives for rubber such as filler, processing aid, plasticizer, colorant, bonding aid, acid acceptor, pigment, flame retardant, lubricant, photo stabilizer, weather-resistant stabilizer, antistatic agent, ultraviolet absorber, antioxidant, release agent, foaming agent, perfume, oil, and softener, and other polymers such as polyethylene, polypropylene, polyamide, polyester, and polyurethane to the extent that the effects of the present invention are not deteriorated.

Examples of the filler include: metal oxides such as calcium oxide, magnesium oxide, titanium oxide, and aluminum oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; metal sulfides such as synthesized hydrotalcite; molybdenum disulfide, iron sulfide, and copper sulfide; diatomaceous earth, asbestos, lithopone (zinc sulfide/barium sulfide), graphite, carbon fluoride, calcium fluoride, coke, fine particulate quartz, talc, powdery mica, Wollastonite, fibrous carbon, fibrous aramid, various whiskers, fibrous glass, organic reinforcing agent, organic filler, polytetrafluoroethylene, mica, silica, celite, and clay.

Examples of the processing aid include: higher fatty acids such as stearic acid, oleic acid, palmitic acid, and lauric acid; higher fatty acid salts such as sodium stearate and zinc stearate; higher fatty acid amides such as stearamide and oleamide; higher fatty acid esters such as ethyl oleate; petroleum wax such as carnauba wax and ceresin wax; polyglycols such as ethylene glycol, glycerine, and diethylene glycol; aliphatic hydrocarbons such as vaseline and paraffin; silicone oils, silicone polymers, low molecular weight polyethylene, phthalic acid esters, phosphoric acid esters, rosin, (halogenated) dialkylamines, surfactants, sulfone compounds, and fluorine aids.

If the fluororubber composition prepared by the above method (1) or (2) is to be mixed with an additive such as a cross-linking agent, the composition may be further mixed with an alkylamine compound and/or an acid acceptor. The alkylamine compound to be mixed with the composition in this step of blend-mixing an additive such as a cross-linking agent may be the same as or different from the organic amine compound (C1) mixed in the above method (1) or (2). The amount thereof is preferably 0.1 to 3 parts by mass to 100 parts by mass of the fluororubber (A). Also, in the case of mixing an acid acceptor, the acid acceptor may be the same as or different from the acid acceptor (C2) mixed in the method (1) or (2). The amount thereof is preferably 0.1 to 3 parts by mass to 100 parts by mass of the fluororubber (A).

The fluororubber composition obtainable by the production method according to the present invention may be cross-linked by an appropriately selected method. Examples of the method include common cross-linking methods by extrusion, pressing, or injection. In the case of cross-linking a tube-shaped product such as a hose, a cross-linking method using a vulcanizing pan and the like is employed. Examples of the method also include such as a molding method by extrusion or wrapped cure. If the fluororubber composition needs to be subjected to secondary curing depending on the intended use of the cross-linked product to be obtained, the composition may be secondarily cured in an oven.

The obtained cross-linked fluororubber product has a particularly excellent normal state at room temperature and mechanical properties at high temperatures in the case of having a loss modulus E" of 400 kPa or higher and 6000 kPa or lower determined by a dynamic viscoelasticity test (measurement mode: tensile, chuck distance: 20 mm, tensile strain: 1%, frequency: 10 Hz, initial force: 157 cN, and measurement temperature: 160°C).

If the loss modulus E" is within the above range, the cross-linked product has a particularly excellent normal state at room temperature and mechanical properties at high temperatures. The lower limit thereof is preferably 420 kPa, and more preferably 430 kPa. The upper limit thereof is preferably 5,900 kPa, and more preferably 5,800 kPa.

For improved mechanical properties at high temperatures, the cross-linked fluororubber product further preferably has a storage modulus E' of 1,500 kPa or higher and 20,000 kPa or lower determined by a dynamic viscoelasticity test (measurement mode: tensile, chuck distance: 20 mm, measurement temperature: 160°C, tensile strain: 1%, initial force: 157 cN, and frequency: 10 Hz). The lower limit thereof is preferably 1,600 kPa, and more preferably 1,800 kPa, while the upper limit thereof is preferably 19,000 kPa, and more preferably 18,000 kPa.

The cross-linked fluororubber product preferably has an elongation at break at 160°C of 100 to 700%, more preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 160°C of 1 MPa or higher, further preferably 1.5 MPa or higher, and particularly preferably 2 MPa or higher, while preferably 30 MPa or lower, and particularly preferably 28 MPa or lower, because such a cross-linked product is suitably used under high-temperature conditions.

The cross-linked fluororubber product preferably has a tearing strength at 160°C of 3 to 30 kN/m, further preferably 4 kN/m or higher, and particularly preferably 5 kN/m or higher, while preferably 29 kN/m or lower, and particularly

preferably 28 kN/m or lower, because such a cross-linked product is suitably used under high-temperature conditions.

The cross-linked fluororubber product preferably has an elongation at break at 200°C of 100 to 700%, more preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 200°C of 1 to 30 MPa, further preferably 1.5 MPa or higher, and particularly preferably 2 MPa or higher, while preferably 29 MPa or lower, and particularly preferably 28 MPa or lower, because such a cross-linked product is suitably used under high-temperature conditions. The tensile strength at break and the elongation at break are measured using #6 dumbbells in accordance with JIS-K 6251.

The cross-linked fluororubber product preferably has a tearing strength at 200°C of 3 to 30 kN/m, further preferably 4 kN/m or higher, and particularly preferably 5 kN/m or higher, while preferably 29 kN/m or lower, and particularly preferably 28 kN/m or lower, because such a cross-linked product is suitably used under high-temperature conditions.

A cross-linked fluororubber product having such properties can be suitably used for various applications including the following applications.

(1) Hose

A hose may be a monolayer hose consisting of the cross-linked fluororubber product obtainable by cross-linking the fluororubber composition of the present invention, or may be a multilayer hose having a laminated structure with other layers.

Examples of the monolayer hose include exhaust gas hoses, EGR hoses, turbo charger hoses, fuel hoses, brake hoses, and oil hoses.

Examples of the multilayer hose also include exhaust gas hoses, EGR hoses, turbo charger hoses, fuel hoses, brake hoses, and oil hoses.

Turbo systems are usually provided for diesel engines. In the turbo system, exhaust gas discharged from an engine is sent to a turbine so that the turbine is turned. Turning of the turbine drives a compressor coupled with the turbine, and the compressor increases the compression ratio of the air supplied to the engine; as a result, the output of power increases. The turbo system, which utilizes exhaust gas from an engine and generates a high power, contributes to downsizing of an engine, low fuel consumption of an automobile, and purification of exhaust gas.

A turbo charger hose is used in the turbo system as a hose for sending compressed air into the engine. In order to effectively use the limited engine-room space, a rubber hose which is excellent in flexibility and softness is advantageous. Typically used hoses have a multilayer structure that an inner layer comprises a rubber (especially a fluororubber) layer excellent in heat-aging resistance and oil resistance and an outer layer comprises a silicone rubber or an acrylic rubber. However, the conditions of the engine and its vicinities such as the engine room are severe due to high temperature and vibration. Thus, the hose requires not only excellent heat-aging resistance but also excellent mechanical properties at high temperatures.

Hoses satisfy these required characteristics at high levels using a cross-linked fluororubber layer obtainable by cross-linking the fluororubber composition of the present invention into a monolayer or multilayer rubber layer, and thus provide a turbo charger hose having excellent properties.

In multilayer hoses other than the turbo charger hose, layers made of other materials may be layers made of other rubbers, thermoplastic resin layers, fiber-reinforced layers, and metal foil layers, for example.

In the case that chemical resistance and flexibility are particularly required, the other rubbers are preferably at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer hose, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

Hoses produced from the cross-linked product of the present invention may be suitably used in the following fields.

In the fields relating to semiconductor production, e.g. semiconductor producing devices, liquid crystal panel producing devices, plasma panel producing devices, plasma-addressed liquid crystal panels, field emission display panels, and solar battery substrates, such a hose may be used as a hose for devices under high-temperature conditions such as CVD devices, dry etching devices, wet etching devices, oxidation diffusion devices, sputtering devices, ashing devices, washing devices, ion implanting devices, and gas discharging devices.

In the automobile field, the hose can be used as a hose in peripheral devices of engines and automatic transmissions, such as an EGR hose, an exhaust gas hose, a fuel hose, an oil hose, and a brake hose, as well as a turbo charger hose.

Furthermore, the hose can be used in the fields of aircraft, rockets and shipping, chemical plants, analysis/physical and chemical appliances, food plant appliances, nuclear plant appliances, and the like.

(2) Sealing material

Sealing materials can be suitably used in the following fields.

Sealing materials may be used, for example, for vehicles, specifically in the engine body, main driving system, valve gear system, lubricant and cooling system, fuel system, and air intake and exhaust system, of the engine; transmissions of the drive system; the steering system of the chassis; the braking system; and the basic electrical components, controlling electric components, and accessory electrical components. In such a field, the sealing material is required to have heat resistance, oil resistance, fuel oil resistance, engine antifreeze coolant resistance, and steam resistance. Examples of such a sealing material include gaskets and contact or non-contact packings (e.g. self-sealing packings, piston rings, split ring packings, mechanical seals, oil seals).

The sealing material used for the engine body of a vehicle engine is not particularly limited, and examples thereof include cylinder head gaskets, cylinder head cover gaskets, oil pan packings, general gaskets, O-rings, packings, and timing belt cover gaskets.

Examples of the sealing material used for the main driving system of a vehicle engine include, but not particularly limited to, shaft seals such as a crank shaft seal and a cam shaft seal.

Examples of the sealing material used for the valve gear system of a vehicle engine include, but not particularly limited to, valve stem oil seals for an engine valve, and valve seats of a butterfly valve.

Examples of the sealing material used for the lubricant and cooling system of a vehicle engine include, but not particularly limited to, seal gaskets for an engine oil cooler.

Examples of the sealing material used for the fuel system of a vehicle engine include, but not particularly limited to, oil seals for a fuel pump, filler seals and tank packings for a fuel tank, connector O-rings for a fuel tube, injector cushion rings, injector seal rings, and injector O-rings for a fuel injection device, flange gaskets for a carburetor, and sealing materials for EGR.

Examples of the sealing material used for the air intake and exhaust system of a vehicle engine include, but not particularly limited to, intake manifold packings and exhaust manifold packings for a manifold, throttle body packings for a throttle, and turbine shaft seals for a turbo charger.

Examples of the sealing material used for the transmissions of a vehicle include, but not particularly limited to, bearing seals, oil seals, O-rings, and packings for a transmission; and O-rings and packings for an automatic transmission.

Examples of the sealing material used for the braking system of a vehicle include, but not particularly limited to, oil seals, O-rings, packings, piston cups (rubber cups) of master cylinders, caliper seals, and boots.

Examples of the sealing material used for the accessory electrical component of a vehicle include, but not particularly limited to, O-rings and packings for a car air-conditioner.

The sealing material is particularly suitable as a sealing material (bush) for a sensor, and more suitable as a sealing material for an oxygen sensor, a sealing material for a nitrogen oxide sensor, and a sealing material for a sulfur oxide sensor. O-rings herein may be square rings.

The sealing material may be applied to any field other than the field of vehicles. The sealing material can be used in a wide range of fields such as fields of aircraft, rocket, shipping, oil well drilling (e.g. packer seal, seal for MWD, seal for LWD), chemical products (e.g. plants), medical products (e.g. drugs), photographing (e.g. developing machines), printing (e.g. printing machines), coating (e.g. coating facility), analysis/physical and chemical appliances, food plant appliances, nuclear plant appliances, steals (e.g. steel plate processing equipment), general industries, electrics, fuel cells, electronic components, and forming in place.

Examples of such a sealing material include packings, O-rings, and other sealing materials having oil resistance, chemical resistance, heat resistance, steam resistance or weather resistance in transportation facilities such as ships and boats, and aircrafts; similar packings, O-rings, and other sealing materials in oil well drilling; similar packings, O-rings, and other sealing materials in chemical plants; similar packings, O-rings, and other sealing materials in food plant

appliances and food appliances (including household products); similar packings, O-rings, and other sealing materials in nuclear plant appliances; and similar packings, O-rings, and other sealing materials in general industrial components.

(3) Belt

The cross-linked fluororubber product of the present invention can be suitably used for the following belts.
That is, the cross-linked fluororubber product can be used for a belt of a power transmission belt (including flat belts, V belts, V-ribbed belts, and synchronous belts) or a belt for conveyance (conveyer belt). Further, in the fields relating to semiconductor production, e.g. semiconductor producing devices, liquid crystal panel producing devices, plasma panel producing devices, plasma-addressed liquid crystal panels, field emission display panels, and solar battery substrates, the cross-linked fluororubber product may be used for a belt for devices under high-temperature conditions such as CVD devices, dry etching devices, wet etching devices, oxidation diffusion devices, sputtering devices, ashing devices, washing devices, ion implanting devices, and gas discharging devices.
Examples of the flat belt include flat belts for high-temperature components such as ones arranged around the engine of an agricultural machine, a machine tool, an industrial machine, or the like. Examples of the conveyer belt include conveyer belts for conveying bulks and granules such as coal, crushed stones, earth and sand, mineral, and wood chips at high temperatures; conveyer belts used in a blast furnace or the like in iron works; and conveyer belts for use at high temperatures in a precision-instruments assembly plant, a food factory, or the like. Examples of the V belt and the V-ribbed belt include V belts and V-ribbed belts for agricultural machines, general machinery (e.g. OA equipment, a printing machine, business-use drier), and vehicles. Examples of the synchronous belt include synchronous belts such as transmission belts of transfer robots, and transmission belts for food machines and machine tools; and synchronous belts for vehicles, OA equipment, medical use, and printing machines. Specific examples of the synchronous belt for a vehicle include timing belts.
In multilayer belts, layers made of other materials may be layers made of other rubbers, thermoplastic resin layers, fiber-reinforced layers, canvas, and metal foil layers, for example.
In the case that chemical resistance and flexibility are particularly required, other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.
Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.
In the case of forming a multilayer belt, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(4) Vibration-insulating rubber

The cross-linked fluororubber product of the present invention satisfies the required characteristics of a vibration-insulating rubber at high levels using the cross-linked fluororubber product as a monolayer or multilayer rubber layer, and thus provides a vibration-insulating rubber for a vehicle which has excellent properties.
In multilayer vibration-insulating rubber other than the one for a vehicle, layers made of other materials may be layers made of other rubbers, thermoplastic resin layers, fiber-reinforced layers, and metal foil layers, for example.
In the case that chemical resistance and flexibility are particularly required, other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.
Further, the thermoplastic resin is preferably a thermoplastic resin comprising at least one selected from the

group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer vibration-insulating rubber, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(5) Diaphragm

The cross-linked fluororubber product of the present invention is suitable for the diaphragms described below.

Examples of the diaphragms include those for vehicle engines, specifically those used in the fuel system, exhaust system, braking system, drive system, and ignition system, which need to have heat resistance, oxidation resistance, fuel resistance, and low gas permeability.

Examples of the diaphragms used in the fuel system of a vehicle engine include: diaphragms for fuel pumps, diaphragms for carburetors, diaphragms for pressure regulators, diaphragms for pulsation dampers, diaphragms for ORVR, diaphragms for canisters, and diaphragms for auto fuel cocks.

Examples of the diaphragms used in the exhaust system of a vehicle engine include: diaphragms for waste gates, diaphragms for actuators, and diaphragms for EGR.

Examples of the diaphragms used in the braking system of a vehicle engine include diaphragms for air braking.

Examples of the diaphragms used in the drive system of a vehicle engine include diaphragms for oil pressure.

Examples of the diaphragms used in the ignition system of a vehicle engine include diaphragms for distributors.

Examples of the diaphragms in addition to those for vehicle engines includes: diaphragms for general pumps, diaphragms for valves, diaphragms for filter press, diaphragms for blower, diaphragms for air conditioners, diaphragms for control equipments, diaphragms for water supply, diaphragms for pumps transferring hot water used for hot-water supply and the like, diaphragms for high-temperature steam, diaphragms for semiconductor devices (for example, diaphragms for transferring chemicals used in a manufacturing process), diaphragms for gas appliances such as instantaneous gas water heaters and gas meters, diaphragms for food-processing devices, diaphragms for liquid storage tanks, diaphragms for pressure switches, diaphragms used oil exploration and oil drilling (for example, diaphragms for lubricant oil supply, such as oil drill bits ), diaphragms for accumulators, and diaphragms for air springs such as suspensions, diaphragms for screw feeders for ships and boats, and diaphragms for medical artificial hearts, which need to have heat resistance, oil resistance, chemical resistance, steam resistance, and low gas permeability.

EXAMPLES

The present invention will be described referring to, but not limited to, the following examples.

Measurement methods of physical properties adopted in the present invention are as follows.

(1) Dynamic viscoelasticity test

(A) Dynamic viscoelasticity measurement before cross-linking (shear modulus G')

Measurement method of difference $\delta$G' between shear modulus G'(1%) at 1% dynamic strain and shear modulus G'(100%) at 100% dynamic strain

The viscoelasticity is measured using a rubber process analyzer (model: RPA 2000) produced by Alpha Technology Co., Ltd. at 100°C and 1 Hz.

(B) Dynamic viscoelasticity measurement of cross-linked product (storage modulus E' and loss modulus E")

Measurement device: Dynamic viscoelasticity measurement device DVA-220 (IT Keisoku Seigyo K.K.)

Measurement conditions

Specimen: cross-linked rubber cuboid having a size of 3 mm in width x 2 mm in thickness

Measurement mode: tensile

Chuck distance: 20 mm

Measurement temperature: 160°C
Tensile strain: 1%
Initial force: 157 cN
Frequency: 10 Hz

(2) Tensile strength at break, elongation at break

The test devices to be used are RTA-1T produced by Orientec Co., Ltd. and AG-I produced by Shimadzu Corporation. The tensile strength at break and the elongation at break are measured using #6 dumbbells at a strain rate of 500 mm/min with a chuck distance of 50 mm in accordance with JIS-K 6251. The measuring temperatures are 25°C and 160°C.

(3) Repeated high-temperature tensile test

The test device used is AG-I produced by Shimadzu Corporation. The tensile conditions are #6 dumbbells, a chuck distance of 50 mm, and a chuck movement speed of 500 mm/min, in accordance with JIS-K 6251. The temperature is set to 160°C. The sample was 300%-stretched repeatedly, and the number of cycles until the breaking of the sample was counted.

(4) Mooney viscosity ($ML_{1+10}$ (100°C) )

The Mooney viscosity was determined in accordance with ASTM-D 1646 and JIS K 6300. The measurement temperature is 100°C.

In the examples and comparative examples, the following fluororubber, carbon black, organic amine compound, peroxide cross-linking agent, and cross-linking accelerator were used.

(Fluororubber)

A1: Pure water (44 L), a 50% aqueous solution of $CH_2=CFCF_2OCF(CF_3)CF_2OCF(CF_3)COONH_4$ (8.8 g), and a 50% aqueous solution of $F(CF_2)_3COONH_4$ (176 g) were charged into a 82-L stainless-steel autoclave, and the air inside the system was sufficiently replaced with nitrogen gas. The mixture was stirred at 230 rpm and heated to 80°C, and then monomers were injected under pressure so that the initial monomer composition in the tank was VdF/HFP = 50/50 mol% and the internal pressure was 1.52 MPa. A polymerization initiator solution prepared by dissolving APS (1.0 g) into pure water (220 ml) was injected under pressure using nitrogen gas, and thus a reaction was initiated. When the internal pressure was down to 1.42 MPa as the polymerization proceeded, a mixed monomer (VdF/HFP = 78/22 mol%), which is an additional monomer, was injected under pressure until the internal pressure reached 1.52 MPa. Then, a diiodine compound $I(CF_2)_4I$ (73 g) was injected under pressure. While the pressure was repeatedly increased and decreased, an aqueous solution of APS (1.0 g)/pure water (220 ml) was injected under pressure using nitrogen gas every 3 hours so as to allow the polymerization reaction to proceed. As 14,000 g in total of the mixed monomer was added, unreacted monomers were removed and the autoclave was cooled down. Thereby, a fluororubber dispersion with a solid content concentration of 23.1% by mass was obtained. NMR analysis on the fluororubber showed that the copolymer composition was VdF/HFP = 78/22 (mol%), and the Mooney viscosity ($ML_{1+10}$(100°C) ) was 55. This fluororubber was named Fluororubber A1.

(Carbon black)

(B1): Carbon black SEAST 6 (ISAF; Tokai Carbon Co., Ltd.; $N_2SA$ = 119 $m^2/g$; DBP oil absorption = 114 ml/100 g)

(Organic amine compound)

(C1): Stearylamine (FARMIN 86T, Kao Corp.)

(Cross-linking agent)

(D1): PERHEXA 25B (NOF Corporation)

(Cross-linking accelerator)

(E1): Triallyl isocyanurate (TAIC, Nippon Kasei Chemical Co., Ltd.)

(Acid acceptor)

(F1): Zinc oxide (#1, Sakai Chemical Industry Co., Ltd.)

Example 1

Fluororubber (A1) (100 parts by mass) was mixed with carbon black (B1) (20 parts by mass), stearylamine (C1) (0.5 parts by mass), and zinc oxide (F1) (1.0 part by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 175°C.

The obtained fluororubber precompound (NP) was subjected to the dynamic viscoelasticity test by a rubber process analyzer (RPA 2000). The difference $\delta$G' determined was 602 kPa.

Thereafter, the fluororubber precompound (NP) (121.5 parts by mass) was mixed with PERHEXA 25B (D1) (0.75 parts by mass), TAIC (E1) (0.5 parts by mass), and stearylamine (C1) (0.5 parts by mass) using an 8-inch open roll mixer (KANSAI ROLL Co., Ltd.) at a front roll speed: 21 rpm, back roll speed: 19 rpm, and gap distance between rolls: 0.1 cm. Thereby, a fluororubber full compound (PR) was prepared. The maximum temperature of the discharged mixed product was 71°C.

The fluororubber full compound obtained in Example 1 was pressed at 170°C for 30 minutes to be cross-linked, and then secondarily cured in an oven at 200°C for one hour, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Example 2

Fluororubber (A1) (100 parts by mass) was mixed with carbon black (B1) (20 parts by mass), stearylamine (C1) (2.0 parts by mass), and zinc oxide (F1) (1.0 part by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 163°C.

The obtained fluororubber precompound (NP) was subjected to the dynamic viscoelasticity test by a rubber process analyzer (RPA 2000). The difference $\delta$G' determined was 525 kPa.

Thereafter, the fluororubber precompound (NP) (123.0 parts by mass) was mixed with PERHEXA 25B (D1) (0.75 parts by mass) and TAIC (E1) (0.5 parts by mass) using an 8-inch open roll mixer (KANSAI ROLL Co., Ltd.) at a front roll speed: 21 rpm, back roll speed: 19 rpm, and gap distance between rolls: 0.1 cm. Thereby, a fluororubber full compound (PR) was prepared. The maximum temperature of the discharged mixed product was 70°C.

The fluororubber full compound obtained in Example 2 was pressed at 170°C for 30 minutes to be cross-linked, and then secondarily cured in an oven at 200°C for one hour, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Example 3

Fluororubber (A1) (100 parts by mass) was mixed with carbon black (B1) (20 parts by mass), stearylamine (C1) (0.5 parts by mass), and zinc oxide (F1) (2.0 part by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 162°C.

The obtained fluororubber precompound (NP) was subjected to the dynamic viscoelasticity test by a rubber process analyzer (RPA 2000). The difference δG' determined was 628 kPa.

Thereafter, the fluororubber precompound (NP) (122.5 parts by mass) was mixed with PERHEXA 25B (D1) (0.75 parts by mass), TAIC (E1) (0.5 parts by mass), and stearylamine (C1) (0.5 parts by mass) using an 8-inch open roll mixer (KANSAI ROLL Co., Ltd.) at a front roll speed: 21 rpm, back roll speed: 19 rpm, and gap distance between rolls: 0.1 cm. Thereby, a fluororubber full compound (PR) was prepared. The maximum temperature of the discharged mixed product was 67°C.

The fluororubber full compound obtained in Example 3 was pressed at 170°C for 30 minutes to be cross-linked, and then secondarily cured in an oven at 200°C for one hour, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Example 4

Fluororubber (A1) (100 parts by mass) was mixed with carbon black (B1) (20 parts by mass), and stearylamine (C1) (0.5 parts by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 160°C.

The obtained fluororubber precompound (NP) was subjected to the dynamic viscoelasticity test by a rubber process analyzer (RPA 2000). The difference δG' determined was 554 kPa.

Thereafter, the fluororubber precompound (NP) (120.5 parts by mass) was mixed with PERHEXA 25B (D1) (0.75 parts by mass) and TAIC (E1) (0.5 parts by mass) using an 8-inch open roll mixer (KANSAI ROLL Co., Ltd.) at a front roll speed: 21 rpm, back roll speed: 19 rpm, and gap distance between rolls: 0.1 cm. Thereby, a fluororubber full compound (PR) was prepared. The maximum temperature of the discharged mixed product was 72°C.

The fluororubber full compound obtained in Example 4 was pressed at 170°C for 30 minutes to be cross-linked, and then secondarily cured in an oven at 200°C for one hour, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Example 5

Fluororubber (A1) (100 parts by mass) was mixed with carbon black (B1) (30 parts by mass), zinc oxide (F1) (1.0 part by mass), and stearylamine (C1) (0.5 parts by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 208°C.

The obtained fluororubber precompound (NP) was subjected to the dynamic viscoelasticity test by a rubber process analyzer (RPA 2000). The difference δG' determined was 1416 kPa.

Thereafter, the fluororubber precompound (NP) (131.5 parts by mass) was mixed with PERHEXA 25B (D1) (0.75 parts by mass), TAIC (E1) (0.5 parts by mass), and stearylamine (C1) (0.5 parts by mass) using an 8-inch open roll mixer (KANSAI ROLL Co., Ltd.) at a front roll speed: 21 rpm, back roll speed: 19 rpm, and gap distance between rolls: 0.1 cm. Thereby, a fluororubber full compound (PR) was prepared. The maximum temperature of the discharged mixed product was 76°C.

The fluororubber full compound obtained in Example 5 was pressed at 160°C for 60 minutes to be cross-linked, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Example 6

A fluororubber precompound (NP) was prepared under the same conditions as those for Example 1, except that no stearylamine (C1) was used in the preparation of the precompound. The maximum temperature of the discharged mixed product was 168°C.

The obtained fluororubber precompound (NP) was subjected to the dynamic viscoelasticity test by a rubber process analyzer (RPA 2000). The difference $\delta G'$ determined was 405 kPa.

The fluororubber precompound (NP) (121.0 parts by mass) was mixed with PERHEXA 25B (D1) (0.75 parts by mass), TAIC (E1) (0.5 parts by mass), and stearylamine (C1) (0.5 part by mass) using an 8-inch open roll mixer (KANSAI ROLL Co., Ltd.) under the mixing conditions of front roll speed: 21 rpm, back roll speed: 19 rpm, and gap distance between rolls: 0.1 cm. Thereby, a fluororubber full compound (PR) was prepared. The maximum temperature of the discharged mixed product was 70°C.

The fluororubber full compound obtained in Example 6 was pressed at 170°C for 30 minutes to be cross-linked, and then secondarily cured in an oven at 200°C for one hour, whereby a cross-linked product of a 2-mm-thick sheet-shaped specimen was produced.

The respective cross-linked specimen was measured for the tensile strength at break and elongation at break at 25°C. Also, the specimen was measured for the tensile strength at break and the elongation at break at 160°C, and was subjected to the repeated high-temperature tensile test. Table 1 shows the results.
Further, the cross-linked product was also measured for the dynamic viscoelasticity. Table 1 shows the results.

Comparative Example 1

Fluororubber (A1) (100 parts by mass) was mixed with carbon black (B1) (20 parts by mass) using a mixer (MixLabo 0.5 L, Moriyama Company Ltd., rotor diameter: 6.6 cm, tip clearance: 0.05 cm) under the mixing conditions of front rotor speed: 60 rpm and back rotor speed: 50 rpm. Thereby, a fluororubber precompound (NP) was prepared. The maximum temperature of the discharged mixed product was 174°C.

The obtained fluororubber precompound (NP) was subjected to the dynamic viscoelasticity test by a rubber process analyzer (RPA 2000). The difference $\delta G'$ determined was 453 kPa.

The fluororubber precompound (NP) (120.0 parts by mass) was mixed with PERHEXA 25B (D1) (0.75 parts by mass) and TAIC (E1) (0.5 parts by mass) using an 8-inch open roll mixer (KANSAI ROLL Co., Ltd.) under the mixing conditions of front roll speed: 21 rpm, back roll speed: 19 rpm, and gap distance between rolls: 0.1 cm. Thereby, a fluororubber full compound (PR) was prepared. The maximum temperature of the discharged mixed product was 70°C.

The fluororubber full compound obtained in Comparative Example 1 was pressed at 170°C for 30 minutes to be cross-linked, but a sheet-shaped specimen could not be produced because of under-curing.

[Table 1]

| | Example 1 | Example 2 | Example 3 | Example 4 | Example 5 | Example 6 | Comparative Example 1 |
|---|---|---|---|---|---|---|---|
| Precompound composition (parts by mass) | | | | | | | |
| Fluororubber (A1) | 100 | 100 | 100 | 100 | 100 | 100 | 100 |
| Carbon black (B1) | 20 | 20 | 20 | 20 | 30 | 20 | 20 |
| Stearylamine | 0.5 | 2.0 | 0.5 | 0.5 | 0.5 | | |
| Zinc oxide | 1.0 | 1.0 | 2.0 | | 1.0 | 1.0 | |
| Maximum temperature of discharged mixed product (°C) | 175 | 163 | 162 | 160 | 208 | 168 | 174 |
| Dynamic viscoelasticity test | | | | | | | |
| δG'(kPa) | 602 | 525 | 628 | 554 | 1416 | 405 | 453 |
| Full compound composition (parts by mass) | | | | | | | |
| Precompound | 121.5 | 123.0 | 122.5 | 120.5 | 131.5 | 121.0 | 120.0 |
| TAIC | 0.5 | 0.5 | 0.5 | 0.5 | 0.5 | 0.5 | 0.5 |
| Cross-linking agent | 0.75 | 0.75 | 0.75 | 0.75 | 0.75 | 0.75 | 0.75 |
| Stearylamine | 0.5 | | 0.5 | | 0.5 | 0.5 | |
| Zinc oxide | | | | | | | |
| Maximum temperature of discharged mixed product (°C) | 71 | 70 | 67 | 72 | 76 | 70 | 70 |
| Press cross-linking conditions | 170°C, 30 min | 170°C, 30 min | 170°C, 30 min | 170°C, 30 min | 160°C, 60 min | 170°C,30min | 170°C, 30 min |
| Conditions of secondary curing in an oven | 200°C, 1 hr | 200°C, 1 hr | 200°C, 1 hr | 200°C, 1 hr | | 200°C, 1 hr | |
| Mechanical properties of cross-linked product | | | | | | | |
| Measuring temperature: 25°C | | | | | | | |
| Tensile strength at break (MPa) | 22.3 | 21.0 | 22.0 | 22.7 | 16.9 | 22.6 | - |
| Elongation at break (%) | 660 | 615 | 647 | 653 | 585 | 650 | - |
| Measuring temperature: 160°C | | | | | | | |
| Tensile strength at break (MPa) | 5.2 | 3.9 | 3.2 | 3.8 | 5.9 | 4.3 | - |

(continued)

| | Example 1 | Example 2 | Example 3 | Example 4 | Example 5 | Example 6 | Comparative Example 1 |
|---|---|---|---|---|---|---|---|
| Elongation at break (%) | 460 | 430 | 360 | 350 | 436 | 370 | - |
| Repeated high-temperature tensile test (160°C) | | | | | | | |
| Number of cycles until breaking | 20 | 23 | 17 | 18 | 12 | 7 | - |
| Storage modulus E' (kPa) | 7155 | 6721 | 7299 | 7043 | 10806 | 6695 | - |
| Loss modulus E" (kPa) | 1600 | 1425 | 1638 | 1519 | 3030 | 1426 | - |

## Claims

1. A method for producing a fluororubber composition, comprising the step of
mixing a fluororubber (A) and a carbon black (B) in the presence of an organic amine compound (C1) and/or an acid acceptor (C2) to prepare a mixed product,
wherein the mixed product has a highest temperature Tm of 80°C to 220°C while being mixed and has a highest temperature of 80°C to 220°C upon being discharged.

2. The production method according to claim 1,
wherein the fluororubber composition contains 5 to 50 parts by mass of the carbon black (B) to 100 parts by mass of the fluororubber (A).

3. The production method according to claim 1 or 2,
wherein the carbon black (B) is a carbon black having a nitrogen adsorption specific surface area ($N_2SA$) of 5 to 180 $m^2/g$ and a dibutyl phthalate (DBP) oil absorption of 40 to 180 ml/100 g.

4. The production method according to any one of claims 1 to 3,
wherein the fluororubber (A) is a vinylidene fluoride copolymer rubber, a tetrafluoroethylene/perfluoro(alkyl vinyl ether) copolymer rubber, or a tetrafluoroethylene/propylene copolymer rubber.

5. The production method according to any one of claims 1 to 4,
wherein the fluororubber composition contains 0.1 to 10 parts by mass of the organic amine compound (C1) and/or the acid acceptor (C2), to 100 parts by mass of the fluororubber (A).

6. The production method according to any one of claims 1 to 5,
wherein the fluororubber composition before cross-linking has a difference $\delta G'$ (G' (1%) - G'100%)) of 120 kPa or higher and 3,000 kPa or lower,
the difference determined by subtracting the shear modulus G' (100%) at 100% dynamic strain from the shear modulus G'(1%) at 1% dynamic strain in a dynamic viscoelasticity test with a rubber process analyzer (RPA) under the conditions of a measurement frequency of 1 Hz and a measurement temperature of 100°C.

7. A cross-linked fluororubber product obtained by cross-linking the fluororubber composition by the production method according to any one of claims 1 to 6.

8. The cross-linked fluororubber product according to claim 7,
wherein the cross-linked fluororubber product has a loss modulus E" of 400 kPa or higher and 6,000 kPa or lower determined by a dynamic viscoelasticity test under the conditions of a measurement temperature of 160°C, a tensile strain of 1%, an initial force of 157 cN, and a frequency of 10 Hz.

9. The cross-linked fluororubber product according to claim 7 or 8,
wherein the cross-linked fluororubber product has a storage modulus E' of 1,500 kPa or higher and 20,000 kPa or lower determined by a dynamic viscoelasticity test under the conditions of a measurement temperature of 160°C, a tensile strain of 1%, an initial force of 157 cN, and a frequency of 10 Hz.

## INTERNATIONAL SEARCH REPORT

International application No.
PCT/JP2011/069228

A. CLASSIFICATION OF SUBJECT MATTER
*C08L27/12*(2006.01)i, *C08K3/04*(2006.01)i, *C08K5/17*(2006.01)i

According to International Patent Classification (IPC) or to both national classification and IPC

B. FIELDS SEARCHED

Minimum documentation searched (classification system followed by classification symbols)
C08L27/12, C08K3/04, C08K5/17

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 60-055050 A (E.I. Du Pont De Nemours & Co.), 29 March 1985 (29.03.1985), claims; examples & US 4543394 A & EP 137216 A2 & DE 3481992 D & CA 1240437 A | 1-9 |
| Y | JP 52-078951 A (Daikin Industries, Ltd.), 02 July 1977 (02.07.1977), claims; page 2, lower left column, lines 8 to 18; page 2, lower right column, line 18 to page 3, upper left column, line 2; examples (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 November, 2011 (07.11.11) | 15 November, 2011 (15.11.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2011/069228

C (Continuation). DOCUMENTS CONSIDERED TO BE RELEVANT

| Category* | Citation of document, with indication, where appropriate, of the relevant passages | Relevant to claim No. |
|---|---|---|
| Y | JP 58-037041 A (Daikin Industries, Ltd.), 04 March 1983 (04.03.1983), claims; page 2, lower right column, lines 5 to 14; page 3, upper left column, lines 12 to 16; examples & US 4467074 A & DE 3231111 A | 1-9 |
| Y | JP 2005-239835 A (Nippon Valqua Industries, Ltd.), 08 September 2005 (08.09.2005), claims; paragraph [0063] (Family: none) | 1-9 |
| Y | JP 2004-210830 A (JSR Corp.), 29 July 2004 (29.07.2004), claims; paragraph [0026]; examples (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61377009 A
- JP S6055050 A
- JP 2008184496 A
- JP H0625500 A
- JP 11147891 A
- JP 9111081 A
- WO 0009603 A
- WO 9823675 A
- WO 0005959 A